# EUROPEAN PATENT SPECIFICATION

(11) **EP 0 333 110 B1**
(45) Date of publication and mention of the grant of the patent: **01.03.1995**
(21) Application number: 89104438.0
(22) Date of filing: 13.03.1989
(51) Int. Cl.: G06F 17/60

(54) **System for making pieces to be dispatched ready for shipping**
System für Bereitstellung von zu versendenden Teilen zwecks Verschiffung
Système pour rendre des paquets à expédier prêts au chargement

(30) Priority: 15.03.1988 DE 3808616
(43) Date of publication of application: 20.09.1989
(73) Proprietor: PITNEY BOWES DEUTSCHLAND GMBH, 64646 Heppenheim (DE)
(72) Inventor: Schuricht, Jürgen, D-6147 Lautertal 7 (DE); Grocholl, Reinhold, D-6101 Reichelsheim (DE); Zeiss, Armin, D-6145 Lindenfels/Odw. (DE)
(74) Representative: Patentanwälte Leinweber & Zimmermann

(56) References cited:
- GB-A- 2 182 178
- COMPUTER SYSTEMS vol.5, October 1985, pages 19,20, Bromley,GB;"Helping to move freight forward"
- THE OFFICE vol. 100, no. 2, August 1984,R.C.Lawrence JR.:"The mailroom can help your business prosper"

## Description

The invention relates to a system for making pieces to be dispatched ready for shipping comprising weight entry means, printing means, memory means, input keyboard means and electronic control means coupled with said weight entry means, printing means, memory means and input keyboard means.

Hitherto known systems of this type have been used as automatic scales by which the weight of some piece to be dispatched after having undergone a weighing operation may be printed through the printing means together with some supplementary information stored in the memory means and/or entered by the keyboard means. Although it is thereby possible to simplify certain partial steps involved in making the pieces ready for shipping it is nevertheless not possible to perform the various differing shipping requirements which have to be fulfilled with various different shipping modes as mail, train, air freight or private carriers without substantial and time-consuming interventions by an operator. Especially different charge rate tables, different calculating modes according to distance or zones and different form requirements have to be observed.

GB A 2 182 178 discloses a computerised parcel shipping system which records shipping transactions of various categories.
Computer Systems, vol. 5, No. 10, dated 5th October 1985, pages 19 to 20, Bromley GB, "Helping to move freight forward" discloses a freight forwarding system which prints collection and delivery notes.

It is thus an object of the invention to design a system of the above-referenced type in such a way that the pieces to be dispatched may be made ready for shipping to any desired number of different receivers by any desired selected shipping mode in an automatic manner.

According to the invention this object is attained by the invention being characterized in that said memory means comprises a first storage portion for storing a desired first number of information blocks, each of said information blocks comprising a receiver address text section with its memory contents corresponding to a receiver address for the piece to be dispatched, a second storage portion for storing a desired second number of information blocks, each of said information blocks comprising a shipping mode text section with its memory contents corresponding to a predetermined shipping mode, and a form code section, and a fourth storage portion for storing a desired fourth number of information blocks, said information blocks being selectively locatable in correspondence with the memory contents of said form code sections, the memory contents of each of said selectively locatable information blocks corresponding to a predetermined printing form, and in that said control means comprises first means having a first operating mode in which in response to actuation of said keyboard means in correspondence with a desired receiver address the corresponding information block of said receiver address in said first storage portion is located and responsive to actuation of said keyboard means in correspondence with a desired shipping mode the information block corresponding to this shipping mode in said second storage portion is located and the memory contents of the form code section are read out, and third means controlled by said read-out memory contents of the form code section for reading out the corresponding information block of the fourth storage portion and for controlling the printing means to print out the memory contents of the receiver address text section in correspond ence with the form format determined by said information block corresponding to said predetermined printing form.

With the construction and operation of the system for making pieces to be dispatched ready for shipping as provided for according to the invention it is thus possible to store in said first storage portion all data of the receiver addresses as required for the shipping in the information blocks being randomly accessible. The number of possible receiver addresses is only limited by the storage capacity of the first storage portion and this storage capacity therefore only has to be selected sufficiently large in order to accommodate the number of information blocks which are required for any specific intended use.

Similarly the second storage portion contains the total information necessary for shipping in accordance with any desired number of shipping modes, like for instance mail shipping, train shipping, private carrier shipping, parcel services shipping, air cargo or the like. Since every information block apart from including the shipping mode text section which contains the required text information for any desired carrier additionally includes the form code section, the control information for processing in accordance with the selected shipping mode which is required to cause the control means to operate according to the functions provided in the invention is thereby accessible.

Therefore, as soon as the user has entered the input data necessary to access the desired information block of the first storage portion and the desired information block of the second storage portion into the first means, which may for instance be effected by entering a portion of the memory contents of the receiver address text section and the shipping mode text section, respectively, which is sufficient for the purpose of identification or by an input command to scan through the first and second storage portions, the first means determines the memory contents of the corresponding form code section.

Moreover, in order to additionally account for the fact that for every selected shipping mode certain requirements relating to number and format of shipping forms have to be observed, the third means is controlled by the read-out memory contents of the form code section associated with the selected shipping mode whereby the one or several associated information blocks of the fourth storage portion are selected to thereby supply the printer with the data to be printed in a format which complies with the form requirements. For instance, address stickers and/or way bills or similar shipping documents may automatically be produced in the right form and number. The system according to the invention thus enables automatic production of all documents and papers required for shipping in the desired form and number for freely selectable shipping modes.

A preferred embodiment of the invention includes the further features that each of said information blocks in said first storage portion comprises a location code section with its memory contents corresponding to the geographical position of the location of the receiver address, each of said information blocks in said second storage portion comprises a rate code section, said memory means comprising a third storage portion for storing a desired third number of information blocks, said information blocks being selectively locatable in correspondence with the memory contents of said rate code sections, the memory contents of each of said selectively locatable information blocks corresponding to a predetermined transportation rate table structure as a function of a weight of the piece to be dispatched and the geographical position of the receiver in relation to the sender, said control means comprising second means controlled by said read-out memory contents of the rate code section and the location code section for locating the corresponding information block of said third storage portion in correspondence with the read-out memory contents of said rate code section and for locating a corresponding memory location of said information block in correspondence with the read-out memory contents of said location code section and a weight value entered by the weight entry means for reading out the corresponding transportation rate value, and said third means being operative to print out the transportation rate value in correspondence with the form format determined by said information block in said fourth storage portion.

The location code section provided in addition to the receiver address text section in each of the information blocks in the first storage portion may for instance contain the official zip code of the receiver location or any other data appropriate to identify the receiver location as its memory contents. The rate code section associated with the shipping mode text section of the information blocks in the second storage portion confers pointer information to the information blocks of the third memory portion. These information blocks each represent a charge rate table structure associated with each of the selected shipping modes in which the individual transportation rate values depend on distance or zone and weight and are therefore stored within the information block in storage locations addressable by the memory contents of the respective location code section and by the weight value entered by the weight entry means. Thereby an automatic determination of the transportation rate value for every desired receiver address and shipping mode is attained. On the basis of utilizing the location code section of a selected receiver address and the rate code section of a selected shipping mode the system, the read-out memory contents of the rate code section and the location code section serve as an input signal for the second means which accesses the corresponding information block of the third storage portion in correspondence with the information contents of the rate code section. The applicable transportation rate value is thereby automatically determined and approximately printed onto the selected shipping form or forms.

In practice, certain shipping modes allow for special conditions, according to which apart from the transportation rate values determined by the shipping distance or zone and by the weight of the piece to be shipped extra services may be selected by payment of a supplementary rate, as for instance express shipping. An advantageous embodiment of the invention is therefore characterized in that at least one information block of said third storage portion comprises at least one supplementary information section, the memory contents of said supplementary information section corresponding to a supplementary rate value for an optional transport service and in that said control means comprises fourth means responsive to said second means for adding a supplementary rate value corresponding to the memory contents of said supplementary information section to said read-out transportation rate value in response to a corresponding actuation of said keyboard means.

In this embodiment, after a call to the respective charge rate table structure associated with the selected shipping mode has been performed by the second means the user has thus the option to select the desired extra service from the memory contents of the supplementary information section via the keyboard means and to cause the addition of the supplementary rate value corresponding to this extra service to the ordinary transport rate value. The remaining further processing steps until completion of the appropriate print-out of all shipping forms are then performed with the ordinary transport rate value augmented by the supplementary rate value to thereby effect shipping of the piece to be shipped under claiming of the extra service.

In another embodiment of the invention it is provided that in at least one information block of said third storage portion at least two of said storage locations corresponding each to a different transportation rate value are located by the same value of the read-out storage contents of the location code section and in that said control means comprises fifth means responsive thereto for selecting exactly one of said memory locations for the determination of the transportation rate value in correspondence with a corresponding actuation of the keyboard means.

This embodiment is in consideration of the fact that in practice there may occur conditions in which the code used for identifying the geographic position of the location of the receiver address and stored in the location code section of the information blocks of the first storage portion is not sufficiently refined in view of a certain shipping mode, i. e. that the charge rate table associated with this shipping mode additionally comprises different transportation rates within a location coded by one and the same single location code section. This is especially the case if the location code sections are coded by the official zip codes and e. g. a private freight carrier charges different transportation rates to different installations within this location, as for instance to the airport or to the main railway station of the same city. By the intermediary of the fifth means it is, however, possible to select the appropriate transportation rate which is applicable for the special desired destination location by means of the keyboard means among the several memory locations of the charge rate table which are selected by the memory contents of the location code section.

In the embodiments referenced herein above the postal code of the receiver location was considered as being one example for identifying the geographical position of the location of the receiver address in the location code section. However, any user-defined code may be utilized to define the receiver locations. This will be preferable especially in those cases in which there do exist shipping modes having a transportation rate table structure in which the transportation rate values vary in accordance with a subdivision into destination locations which is finer than the one provided for by the official postal codes. In a specific embodiment of the invention it is thus provided that the information contents of said location code section of said information blocks in said first storage portion is a user-defined code comprising information representative of the postal code for the receiver address and an extension for distinguishing a subarea of the area defined by the postal code information, and that said second means is operative to convert said user-defined location code into appropriate distance information for a distance-related transportation rate table structure in said third storage portion. This embodiment therefore allows the user to create location codes from which the system automatically derives the appropriate distance from the shipping point and automatically refers to the correct transportation rate table. Moreover, the system may be programmed to automatically convert these user-defined codes into city and/or province and/or postal code.

Another embodiment of the invention takes advantage from the fact that said memory means comprises a fifth storage portion for storing a desired fifth number of information blocks and said control means comprises sixth means for storing in each information block a set of protocol data, each set comprising at least selected items from the memory contents of the receiver address text sections and the shipping mode text sections together with the respective transportation rate values as printed out under the control of the third means in response to the corresponding entries of said keyboard means, and for outputting said sets of protocol data at an output terminal in response to a corresponding command entered via said keyboard means. These features allow to establish protocol data covering all shipping operations for the various shipping modes simultaneously with performing the shipping operations, and this protocol data may optionally be printed on an additional protocol printer connected to the output or on the printing means used for printing the forms. Such printing protocols facilitate communication with the shipping agency in certain shipping modes.

In order to enhance versatility of use of these protocol data it is of advantage to incorporate the features that there is provided means for generating real time data representative of the current calendar date and, optionally, the current day-time, and that said sixth means stores each set of said protocal data in association with the current value of said real time data. Thereby the information pertaining to any specific shipping operation is stored together with the calendar date and day-time, if any, thus keeping a full record of the history of all shipping operations.

It may moreover be provided that said control means comprises seventh means being operative to selectively access groups of said sets of protocol data for display and/or print-out in response to data representative of receiver address text information and/or shipping mode text information and/or real time data information entered by said input keyboard means identifying the members of said group. Because of this capability to selectively access groups of sets of protocol data as identified by keyboard input as to receiver address and/or shipping mode and/or real time it is thus possible for the system to produce reports containing the protocol data of any selected group. Specifically the system has the capability for producing reports as to current year's activity on a month-by-month, week-by-week or day-by-day basis for whatever period the user desires. In the same way the system also allows to produce a report of the total activity for the previous year. These reports may be displayed on a video display unit for instantaneous inspection. Alternatively they may be printed to thereby provide a hard copy.

A further advantage is attained by the provision that said sixth means is responsive to control information entered via said keyboard means for determining the format and/or contents of the information displayed and/or printed out from the accessed sets of protocol data. This enables the user to make a selection whether the whole contents of the accessed sets of protocol data or only relevant portions thereof should be displayed and/or printed, and to select the format for the displayed and/or printed protocol information in accordance with his own needs.

In a specifically useful embodiment of the invention it is provided that said control means has a visual display means connected thereto for displaying the information contents of the information block of the first storage portion and/or of the information block of the second storage portion as located by said first means. By the operation of the visual display the user may supervise the correctness of the data and commands input by him via the keyboard means in a specially simple way.

In this context it is specifically useful that said control means includes means for displaying predetermined masks on the screen of said visual display means to display the information contents of said information blocks embedded within said masks. The user thereby obtains an easily understandable representation of the meaning of the displayed information blocks since the visual display masks by their pattern, border lines and supplementary texts immediately make the displayed information contents of the information blocks understandable.

Moreover, it may be provided that said control means includes means for altering the mask format under user control in compliance with associated control characters entered via said keyboard means. This embodiment allows the user to customize the masks in order to have these masks appear on the visual display screen in a format which is specifically convenient for the individual users' purposes. This is especially useful with view to the different amount and format of receiver information occurring for different system users.

There is provided in another advantageous embodiment of the invention that said means for generating said masks for said visual display is operative to insert auxiliary masks in response to a corresponding actuation of the keyboard means, at least one of said auxiliary masks being used for displaying the memory contents of the supplementary information section of said information blocks in said third storage portion in response to actuation of said fourth means. Thus, if for the reason of the specifically selected shipping mode an information block corresponding to such a transportation rate table is selected in the third storage portion which comprises a supplementary information section, then the special services described by said supplementary information section are presented to the user for selection in an easily understandable way by means of the display of the memory contents of this supplementary information section in its associated supplementary mask.

A similar advantage is obtained in another embodiment in which it is provided that said means for generating said masks on said screen of said visual display means is operative to insert auxiliary masks in response to a corresponding actuation of the keyboard means, at least one of said auxiliary masks being used for displaying the memory contents of those receiver address text sections associated to the same value of the read-out memory contents of the location code section in response to operation of said fifth means. If according to the selected shipping mode a destination location defined by the memory contents of the location code section is associated with more than one memory location having different transportation rate values, this is then displayed in the inserted supplementary mask whereby selection of the applicable transportation rate is substantially facilitated for the user.

The usefulness of the screen masks is further enhanced by the provision that said control means is operative to sense the currently activated information field of the currently displayed mask on the screen expecting input via said keyboard means and upon actuation of a help key of said keyboard means displays an information of all allowable types of input information for said field on a portion of the display screen. Thereby, when a user is attempting to complete a specific item as sensed by the control means and activates the help function the system provides instructions to the user for completing this item.

According to another concept of the invention it is provided that said control means comprises seventh means for causing said first and said second means to determine the transportation rate value for at least one further shipping mode and to display the transportation rates corresponding to said different shipping modes in a corresponding mask on the screen in response to a corresponding actuation of the keyboard means. Thereby it is possible to perform a comparison between the transport rate value associated with the selected shipping mode and a corresponding transport rate value of one or more other shipping modes to thereby perform an optimization with respect to price.

When carrying out the comparison among various different shipping modes it would not be necessary to include those shipping modes for comparison which are not relevant because of their difference in type of transportation and services.

Therefore it is provided in a further embodiment of the invention that each of said information blocks in said second storage portion comprises a set of code values, one code value of this set being representative of the individual shipping mode defined by this information block and the others being selected ones from the codes representing the individual shipping modes defined by the other information blocks, said seventh means being operative to calculate and display the transportation rates of shipping modes associated to said set of code values for performing said comparison. This embodiment therefore enables to restrict the comparison to transportation rates of those shipping modes identified by each of said sets of code values. These sets of code values may be programmed by the user via the keyboard means so that the user may preselect which other carrier rates will be displayed for comparison purposes when a given carrier rate is selected.

In order to specially simplify operation of the system for the user during dispatching operations of the pieces it is provided in another embodiment that in said first operation mode said first means initially enables said keyboard means for entry of the key actuation which serves to locate the information block in the first storage portion and subsequently enables said keyboard means for entry of the key actuation which serves to locate the information block in the second storage portion. By means of this operating sequence the system initially expects entry of the information which serves for selection of the receiver address and after having received complete input of this information goes over into a receptive mode for entry of the information which serves for selection of the shipping mode. By means of this predetermined operating sequence the risk of incorrect entries is simultaneously reduced.

For many shipping applications reusable packing materials, e. g. containers or pallets are used. These are identified by serial numbers for the purpose of track-keeping. In an advantageous embodiment it is therefore provided that said memory means comprises a sixth storage portion for storing a desired sixth number of information blocks, and said control means comprises eighth means for storing in each information block a set of track keeping data for reusable packing material as used with the piece to be dispatched, each set comprising at least a serial number of the packing material entered via said keyboard means and receiver address information from the corresponding information block in the first storage portion. Apart from the serial number of the container or pallet each information block may additionally contain data representative of the type of packing material, the receiver address, the calendar date of dispatch, the calendar date of return and other data.

To further enhance the usefulness of this embodiment it may be additionally provided that said eighth means is operative to access selected ones of said information blocks in said sixth storage portion for display and/or print-out in response to entry of at least portions of said track keeping data via said keyboard means. Thereby it is possible to access the track-keeping data for each individual packing material by either of its serial number or other data like receiver address, calendar date of dispatch or the like. Thereby selective listings may be produced for display or print-out under user control.

According to another optional feature of the invention it may be provided for the system that said control means comprises means for calculating the cubic volume of the piece to be dispatched from the dimensions thereof.

There also exist facilities for simple correction, exchange and/or supplement of the receiver addresses and shipping modes provided for a specific user since in an advantageous embodiment of the invention it is provided that said first means comprises a second operating mode in which input data entered by said keyboard means are selectively stored in information blocks of the storage portions, said second operating mode being enabled by a corresponding actuation of the keyboard means. In the second operating mode of the first means it is thus at any time possible for the user to adapt the memory contents of the first and second storage portions to changes and/or supplements in respect of the user addresses and/or the shipping modes.

In addition to or instead of these manual data loading, editing and/or updating facilities it is provided in another embodiment that said control means comprises input/output interface means for reading in data from an external data source into desired storage portions. The memory contents of a storage portion addressed via the interface means may therefore easily be updated by means of the external data source which may e. g. be a central computer. This is particularly advantageous when a comparatively large amount of new receiver addresses or extensive transportation rate tables have to be newly entered into the system.

Especially when the receiver address information is generated by an external data source for input into the system it is advantageous to provide the further feature that each of said information blocks in said first storage portion comprises a code section adapted for storing a code representative of a shipping mode selected from the set of shipping modes defined by said information blocks in said second storage portion, said selected shipping mode being a preferred one for the receiver identified by the receiver address text section of the respective information block in said first storage portion, and that said control means is operative to automatically locate the corresponding information block in said second storage portion in response to locating the information block in said first storage portion. It is thereby not necessary to manually input the shipping mode information as long as the preferred shipping mode accompanying the receiver address information is accepted. When accessing the receiver address selection of the preferred shipping mode is then carried out automatically without further keyboard input. However, by appropriate keyboard input, it is possible to overwrite the preferred shipping mode and to manually enter any other available shipping mode. The code representing the preferred shipping mode in the receiver address information may e. g. be a two-digit decimal code, and two further decimal digits may be provided for defining any selected extra service, like express shipping, for the preferred shipping mode.

It is another important feature of the system in accordance with the invention that each of said information blocks in said first storage portion comprises a group definition section adapted for storing group definition data and in that said control means is responsive to entry of each one of said group definition data together with a desired shipping mode information and a weight value to cause said first, second and third means to automatically locate all information blocks identified by said entered group definition data, determine the applicable transportation rate value for the entered shipping mode and weight value and print the applicable shipping forms for all members in the group. This enables the system to perform batch processing for the case that a defined group of recipients has to be supplied with identical parcels or the like which is e. g. the case with subscribers of mail-order houses. For the user it is only necessary that the group definition data for the group and the weight of the parcel is entered once, and then the system automatically prepares all shipping documents for each recipient in the entire group.

The receiver address information which may be stored in the information blocks of the first storage portion need not be restricted to mere addressing information like name, street, city and country or the like, but may include other information concerning customers. For this purpose it is provided that each of said information blocks in said first storage portion comprises a supplementary information section adapted for storing additional information other than receiver address information. Such additional information may include the products customarily bought by this recipient, prices, or sales history, like a day-by-day history for current year and total for previous year.

The additional information stored in the supplementary information section of the information blocks in said first storage portion may especially comprise all necessary information for creating invoices and may also include the applicable transportation rate value as determined by the system. It is thus another advantageous feature of the system that said control means comprises output interface means for communicating the information contents of said information blocks in said first storage portion when being selected by said keyboard means to external data processing means. The external data processing means may then create the invoices on the basis of the additional information communicated by the system.

According to another feature the system also includes word-processing capability in so far as said memory means comprises a seventh storage portion for storing a desired seventh number of information blocks, each of said information blocks being adapted for storing mass letter information and in that said control means comprises ninth means being responsive to selection of one of said information blocks in said seventh storage portion by said keyboard entry means for causing said printing means to print the contents of the selected information block for all or a selected group of receiver addresses stored in said first storage portion when selected by said keyboard means. The address files stored in the system may thereby be used for purposes other than shipping, such as correspondence or mass letter mailings.

In order to enable such mass letter mailings to include information specific to each customer in addition to the address it may moreover be provided that said ninth means is operative to supplement the information of the accessed information block in said seventh storage portion at marked positions by correspondingly marked information portions from the information blocks in said first storage portion when displaying and/or printing the supplemented information.

In the scope of the invention it is also provided that said printing means comprises an endless form feed, a batch feed and a single form feed and in that said third means automatically selects the individual feeds in correspondence with the read-out memory contents of the form code section. This embodiment fully complies with all requirements in respect of kind and format of the forms which are used in practice. Stickers or labels as well as formatted way bills may be produced in all formats as prescribed by different transportation companies, like parcel carrier, freight carrier, air carrier or the like, and in the desired numbers.

Also as far as the possibilities of weight entry are concerned the system according to the invention proves to be very flexible. While on the one side it may be provided that said weight entry means is a scale generating an electrical output signal which corresponds to the weight of the piece to be shipped it may alternatively be provided that said weight entry means is a light scanner for scanning bar-coded weight information. Alternatively it may, however, be provided that said weight entry means is formed by a numeric key section provided on said keyboard means.

Finally it is in constructional respects especially advantageous that said control means is formed by a microprocessor. With this construction the operational features of the control means as provided in the invention may be realized in a specially simple way.

Other features, details and advantages attained by the invention will become apparent from the following description with reference to the drawings.

In the drawings:
- Fig. 1: shows a schematic diagram of a system for making pieces to be dispatched ready for shipping,
- Fig. 2 (a)to(g): shows the structure of information blocks provided in storage portions of storage means in an embodiment of said system,
- Fig. 3 (a) and (b): a schematic flow chart of a main routine for branching into various operational routines as provided for in an embodiment of the system,
- Fig. 4 (a) and (b): a schematic flow chart of a routine for processing receiver information,
- Fig. 5 (a) and (b): a schematic flow chart of a routine for processing user-defined location codes,
- Fig. 6 (a) and (b): a schematic flow chart of a routine for processing printing form definition information,
- Fig. 7 (a) and (b): a schematic flow chart of a routine for mass letter processing,
- Fig. 8 (a) and (b): a schematic flow chart of a routine for selecting and processing a group of receiver addresses selected from the stored receiver addresses,
- Fig. 9: a schematic flow chart of a routine for user definition of mask format,
- Fig. 10: a schematic flow chart of a routine for the processing of shipping mode information,
- Fig. 11 (a) and (b): a schematic routine for the processing of transportation rate information, and
- Fig. 12 (a) and (b): a schematic flow chart of the control flow of the system in an automatic shipping operation with automatic access to a transportation rate table.

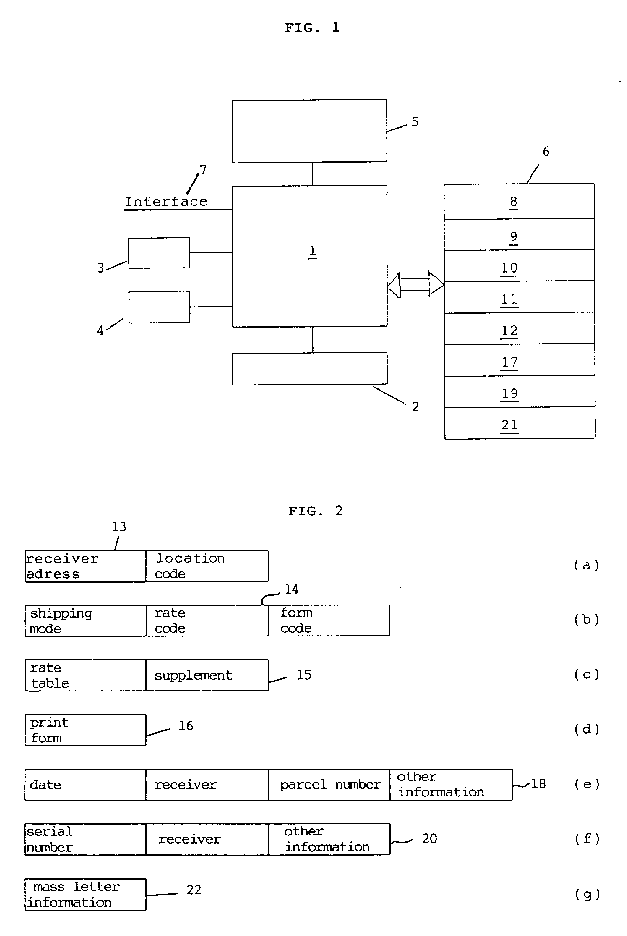

A system for making pieces to be dispatched ready for shipping is schematically represented in Fig. 1 and comprises electronic control means 1 having input keyboard means 2 and a scale 3 for detecting the weight of the pieces to be dispatched coupled to the input side and having printing means 4 coupled to the output side. Moreover a visual display 5 is connected to the electronic control means 1. Memory means 6 is addressed by the electronic control means 1 for random access in read and/or write operations. The control means 1 further includes an input/output interface 7 for connection with an external data source like a central processor.

The control means 1 comprises a number of means having operational features to be described in detail subsequently and being implemented by a microprocessor in the embodiment illustrated in Fig. 1. In the memory means 6 first, second, third, fourth, fifth, sixth and seventh storage portions 8,9, 10,11,12,19 and 21 are provided, which are accessed for pro cessing in a different manner by the microprocessor provided in the control means 1 according to the subsequently described operating sequences.

In the first storage portion 8 of the memory means 6 a desired first number of information blocks 13 is stored having a structure symbolically illustrated in Fig. 2 (a). As may be seen therefrom the information block 13 comprises two mutually associated blocks of storage locations, one of said blocks representing a receiver address text section for storing the text of a receiver address for the piece to be shipped and the other block representing a location code section for storing a code for identifying the geographic position of the location of the receiver address. There the receiver address text section may be structured into several text lines accommodating a salutation, the name of the receiver and the address. Optionally a supplementary information section for storing additional alphanumeric receiver information, a code section for storing a code representative of a preferred shipping mode for this receiver and a group definition section for storing group definition data associating this receiver to a selected one of several groups may be provided within the receiver address text section.

For coding the geographic position of the receiver location any user-defined code which is appropriate to distinguish between receiver locations in accordance with applicable transportation rate structures could be used. Alternatively the official zip code corresponding to the receiver location may be utilized in the location code section with the embodiment illustrated in Fig. 2.

Information blocks 14 provided in a desired number in the second storage portion 9 include according to Fig. 2 (b) three mutually associated blocks of storage locations, one of said blocks representing a shipping mode text section for storing text data to identify a predetermined shipping mode, another block representing a rate code section for storing pointer information to a predetermined charge rate table structure and the remaining block representing a form code section for storing pointer information to one or several predetermined forms.

The shipping mode text section thereby contains all data for identifying a predetermined shipping mode and among these several shipping modes especially transportation by mail, train, various private parcel services and private carriers are included. For each of these shipping modes a predetermined transportation rate charge table structure is applicable from which the transportation rate value associated with a certain weight of the piece to be shipped for a certain distance between the sender and the receiver location or a certain zone may be taken. Optionally, a code value identifying each one of the available shipping modes may be associated to each shipping mode. This code value is stored in the corresponding shipping mode text section together with selected ones from the code values of the other shipping modes.

In the rate code section pointer information is stored which identifies the applicable transportation rate table structure for the shipping mode identified by the information block 14.

Similarly certain form requirements have to be observed for the various shipping modes, e. g. the filling out of a prescribed way bill, a shipping list and especially an address sticker. In the form code section pointer information is therefore stored for identifying one or several of the required forms and the number in which they are required. The transportation rate tables identified by the rate code sections of the information blocks 14 of the second storage portion 9 are each stored in information blocks 15 of the third storage portion 10.

According to Fig. 2 (c) these information blocks 15 in a table section contain a sufficient number of storage locations which are addressable by the memory contents of the location code section of the information block 13 representing the transportation distance or a zone determined in dependence of said distance, and the weight value of the piece to be dispatched in order to enable read-out of the correct transportation rate value for every transported weight and every transportation distance or zone. When the transportation rate tables are based on a division by transportation zones and the zip codes or postal codes are selected as location code an association between these zones and the zip codes representing the memory contents of the location code sections has to be established by means of the control means 1.

Exemplarily, there are countries in which public carriers like postal services or train services use zone-structured rate tables. For every sender location a zone conversion table is available from the local office at the sender location. This zone conversion table associates a unique distance zone number, e. g. numbers 1, 2, 3... up to some finite number n, to any receiver location as a function of its postal code. The control means 1 then has to select this zone conversion table upon entry of the public carrier as desired shipping mode and determines the appropriate zone number upon receipt of the receiver location postal code. With this zone number the applicable transportation rate table defining for this zone, the transportation rate value as a function of the entered weight may then be determined.

Private carriers often make use of distance-related rate tables. For every sender location a table structure is available from which the shipping distance between the sender location and any receiver location may be read out, while the receiver location is defined in terms of its postal code and optionally an extension code discriminating between certain subareas within the area defined by the postal code. In the latter case manual or automatic conversion, as described in more detail below, has to be performed in order to determine the distance value on the basis of postal code. The distance value determined in this way then defines the entry address for the table containing the transportation rate values which are applicable for this distance as a function of the weight.

At least one or several of the information blocks 15 include according to Fig. 2 (c) an associated supplementary information section in which data corresponding to optional extra services and supplementary rates applicable thereto are stored. For instance the extra service "express transport" may be provided for a certain shipping mode and the normal transportation rate value has to be augmented by a fixed supplementary rate value therefor.

The printing forms identified by the form code section of the information blocks 14 of the second storage portion 9 are according to Fig. 2 (d) in a desired fourth number of information blocks 16 stored in the fourth storage portion 11. These information blocks 16 therefore contain the control commands and text information data required for a certain form which cause the printing means to print out the respective form. In the forms stored in the information blocks 16 empty locations are provided at the appropriate positions and the information necessary for completion of the form is inserted prior to print-out from the information blocks 13,15 and, if applicable, 14.

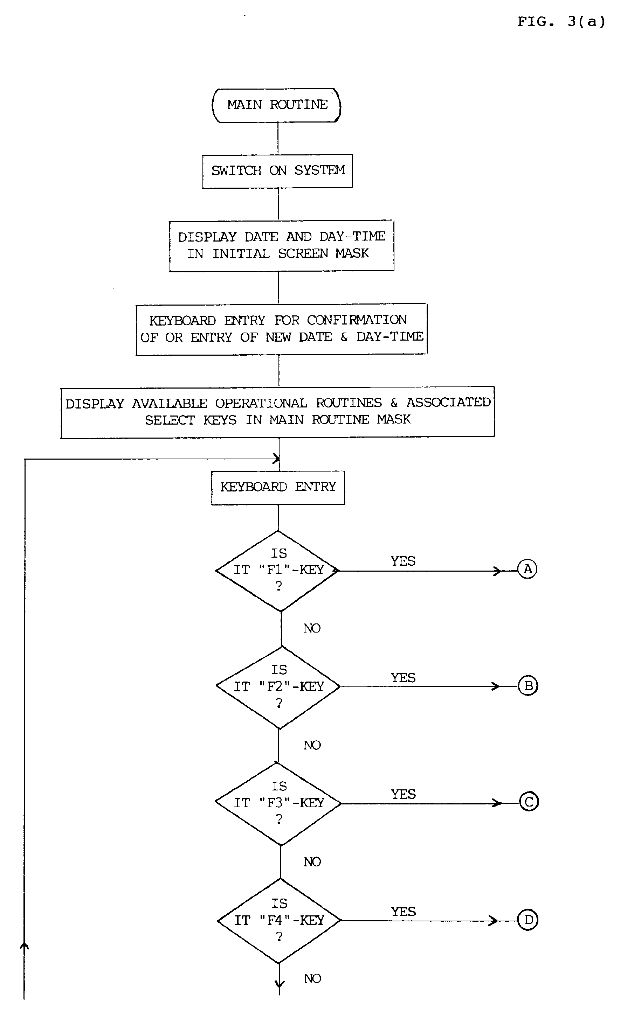

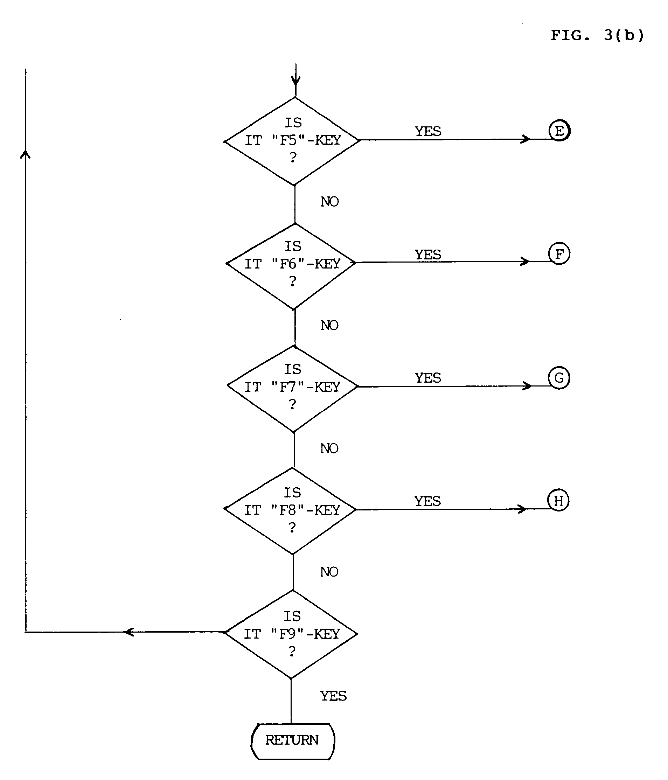

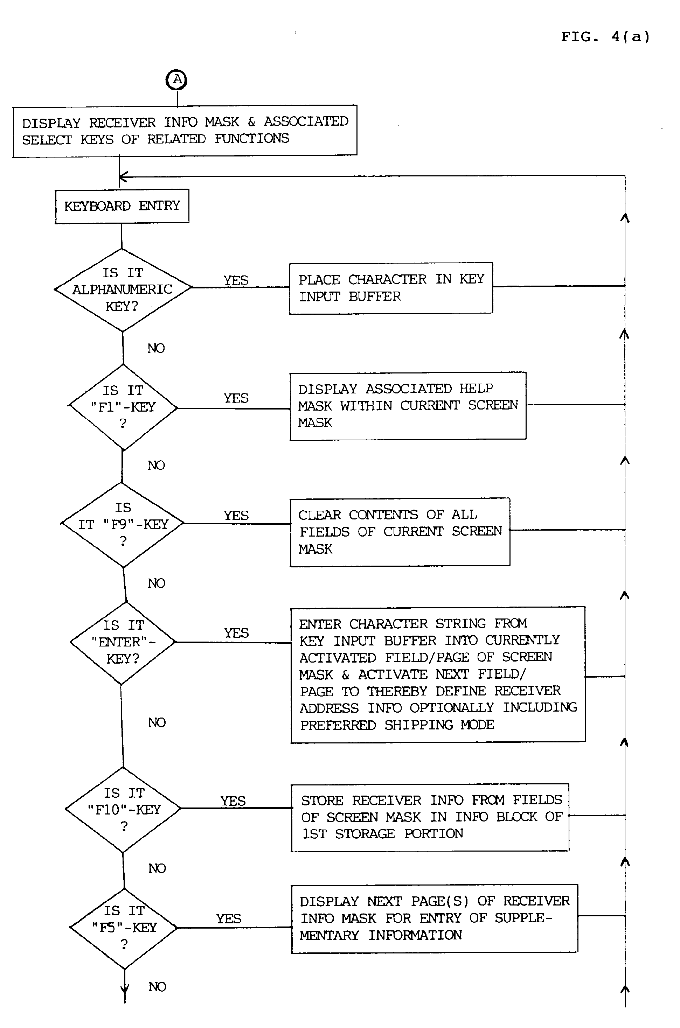

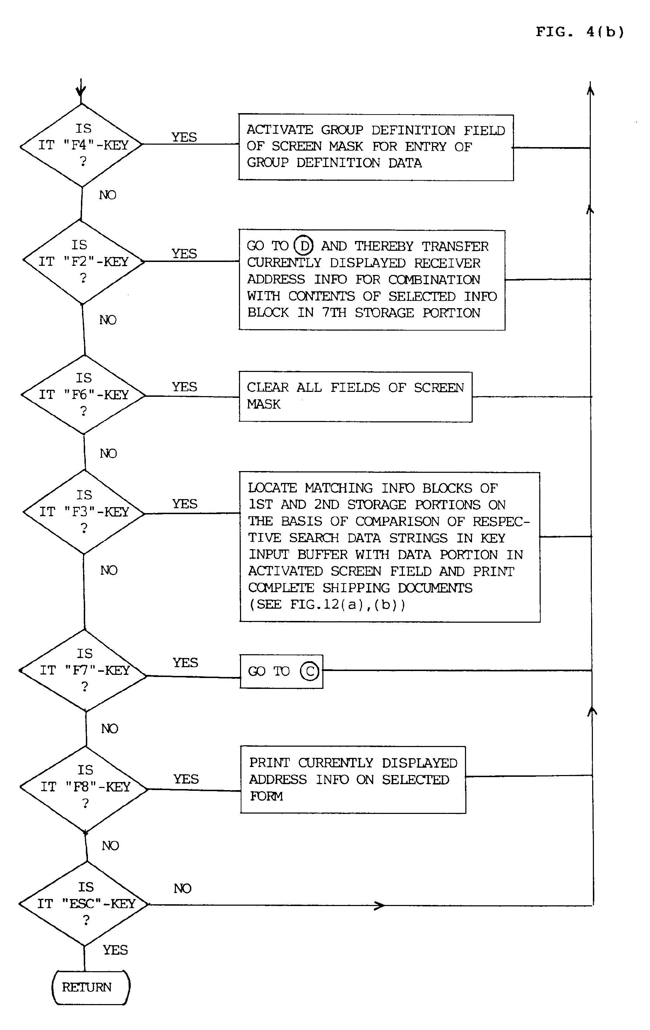

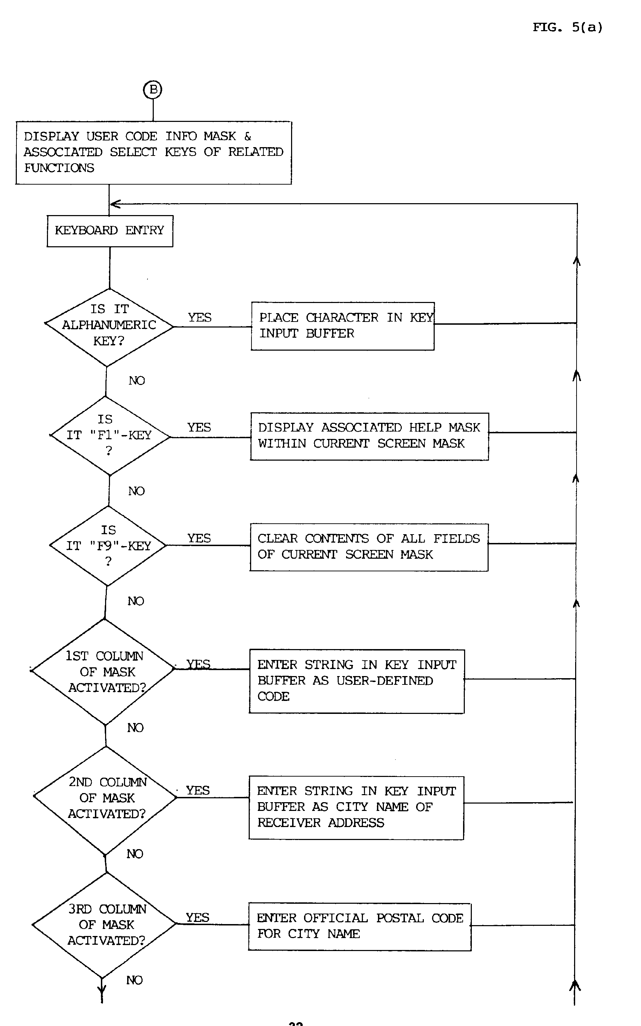

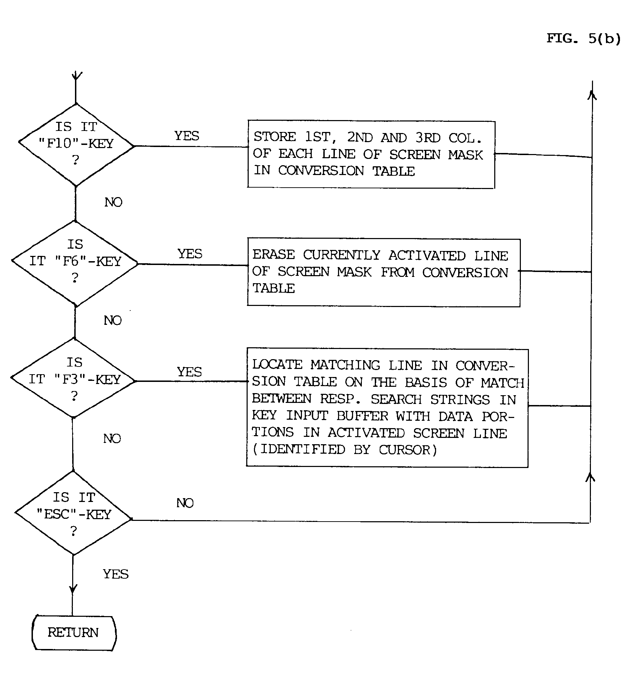

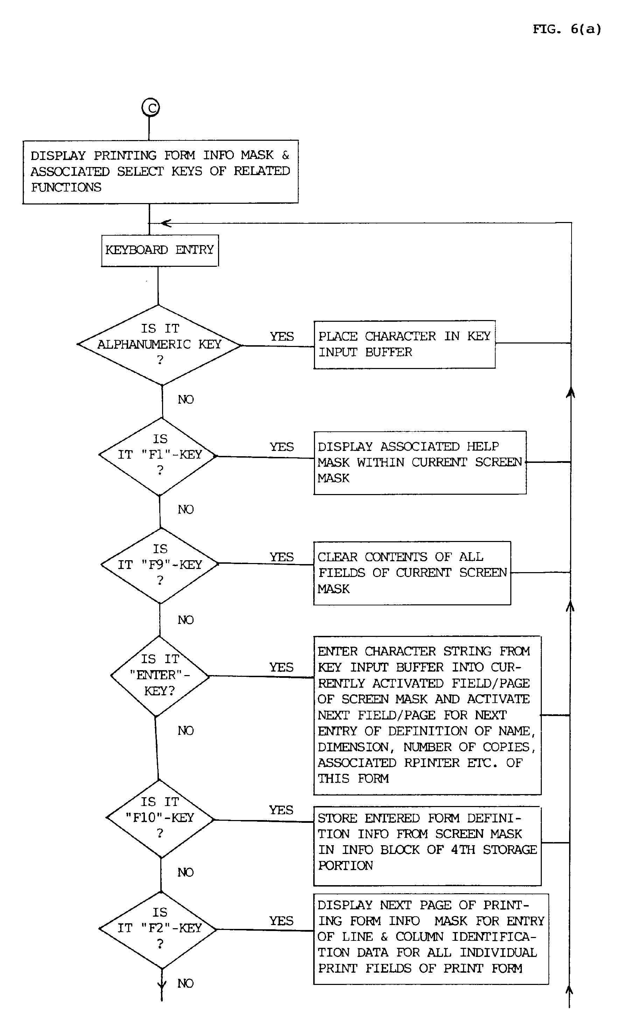

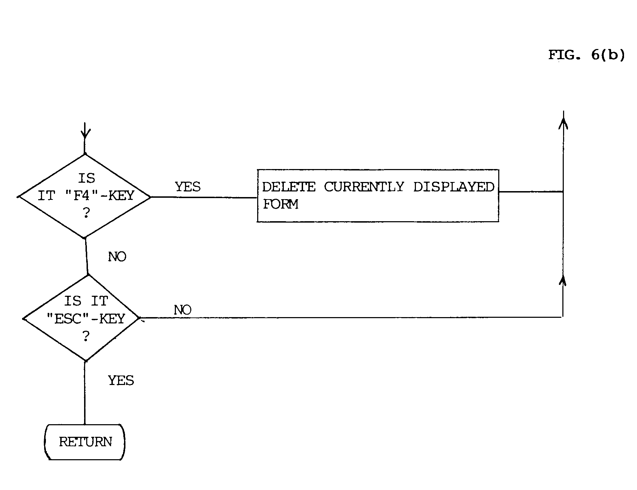

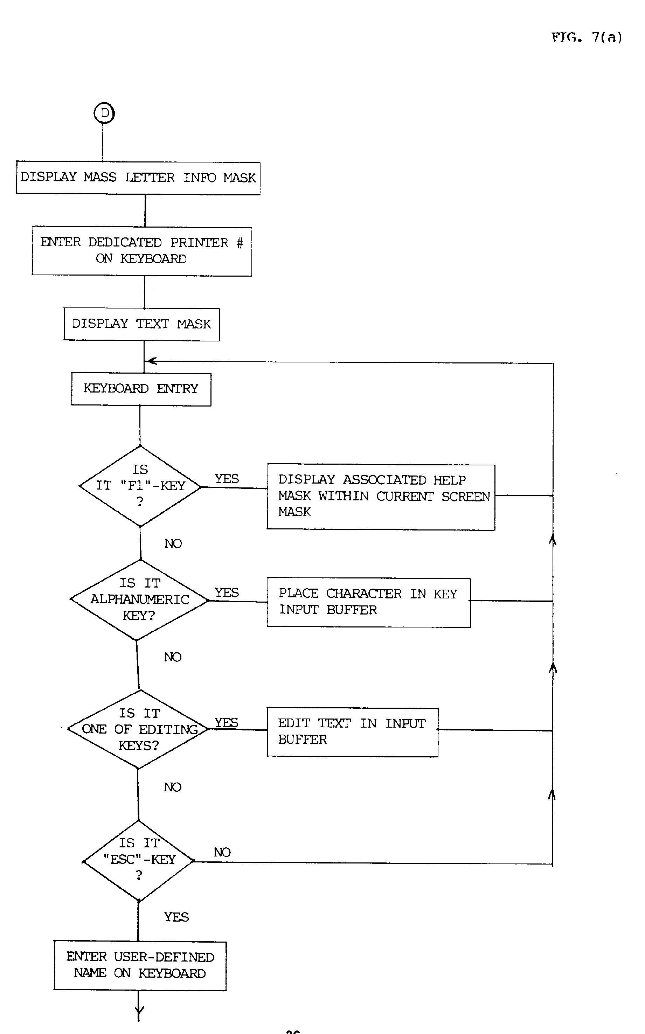

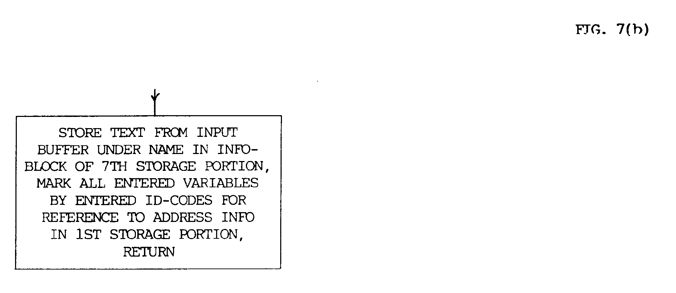

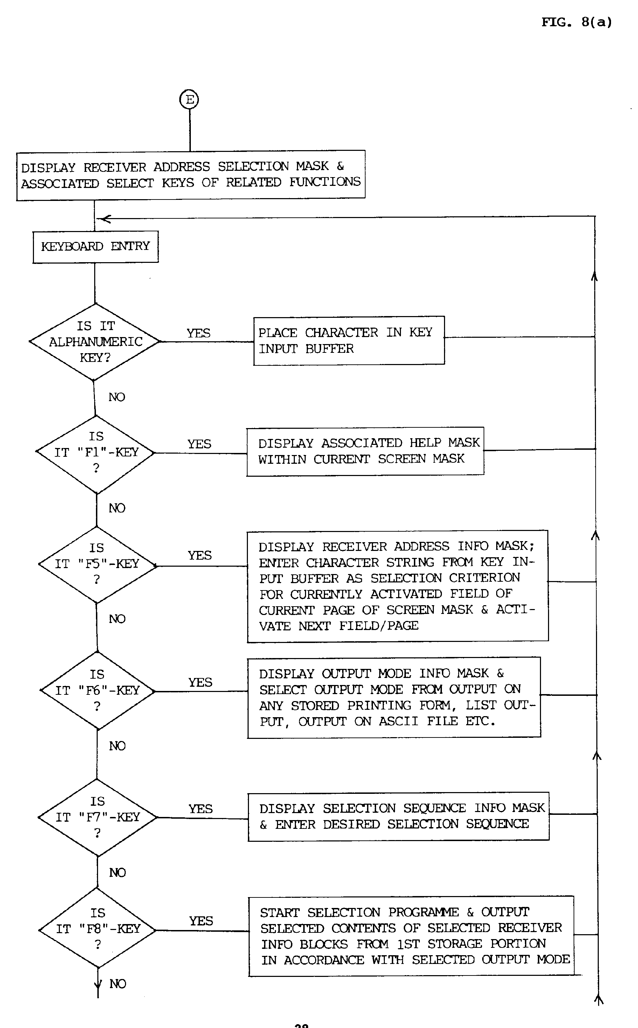

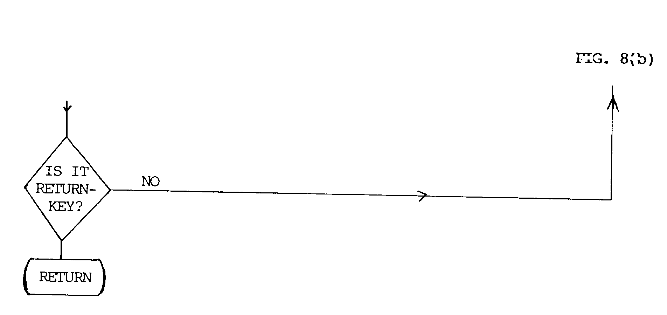

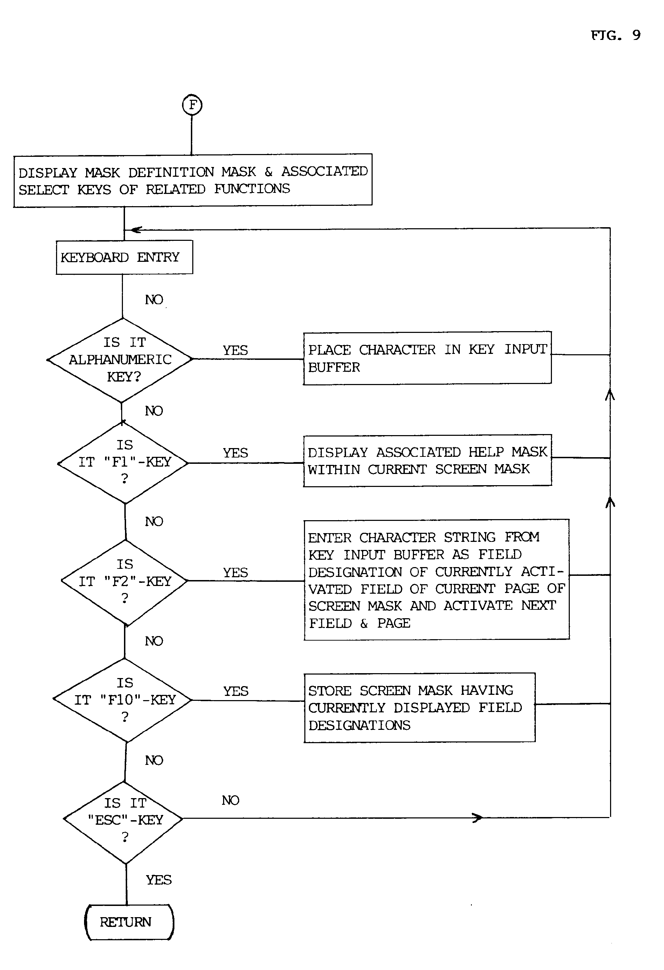

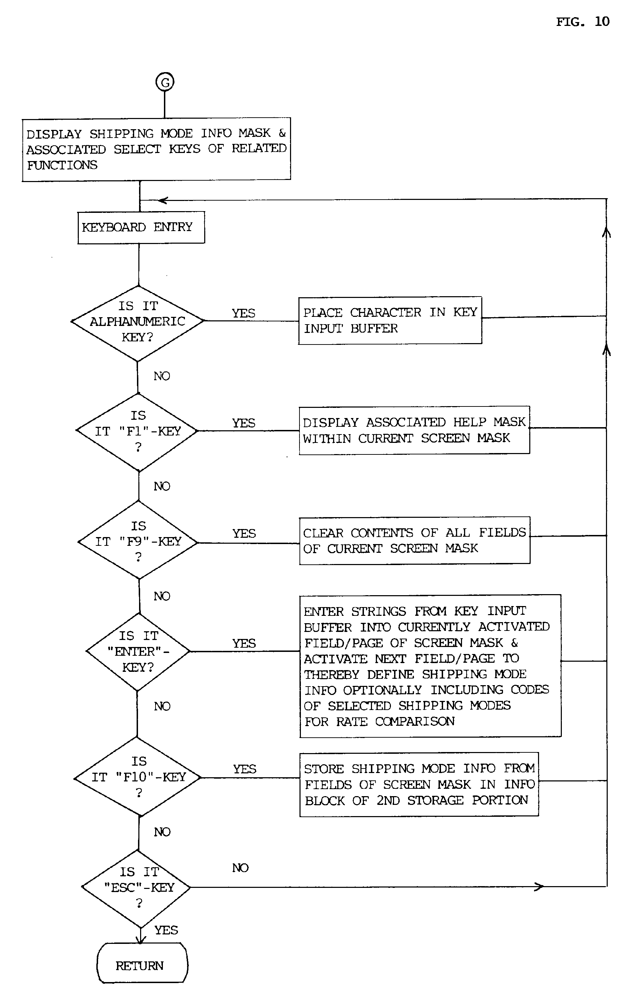

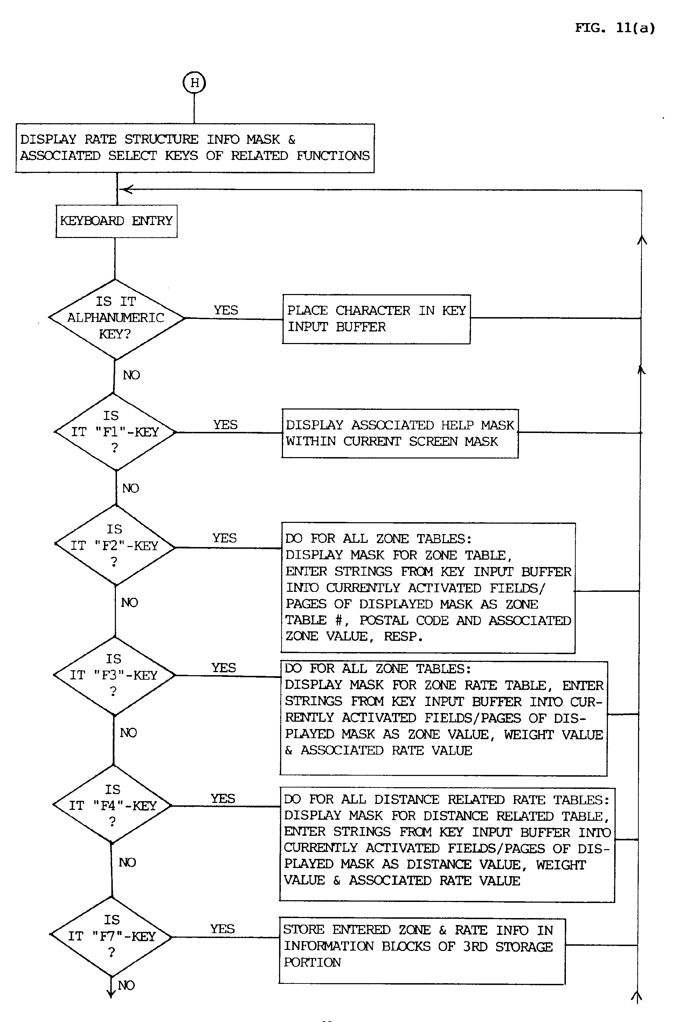

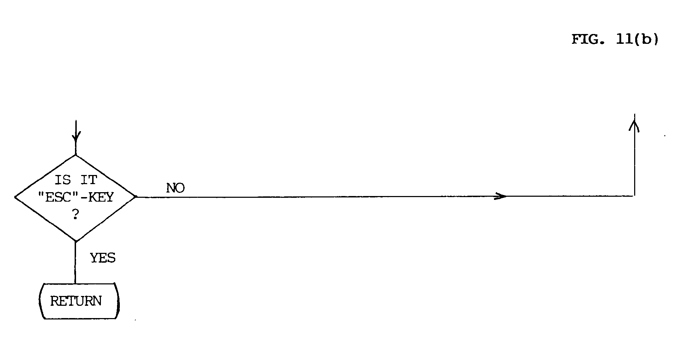

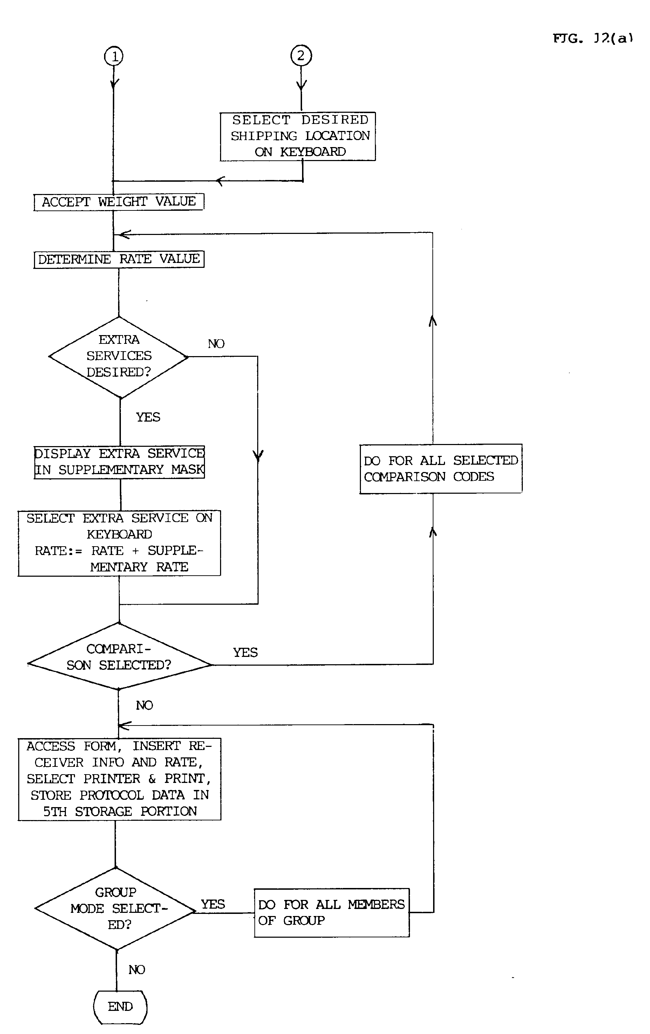

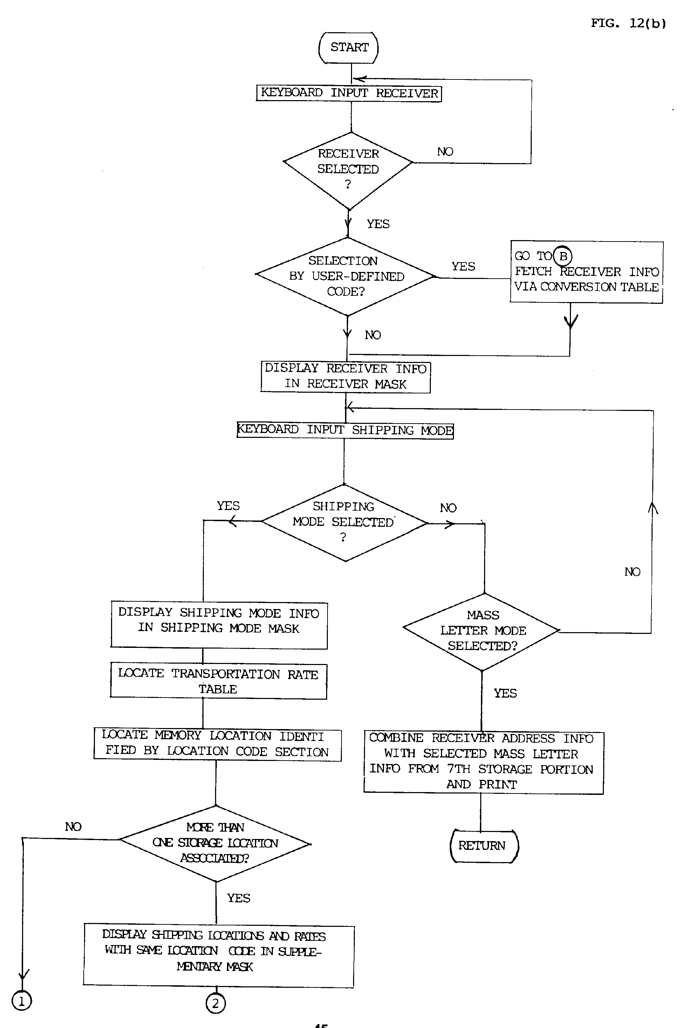

The various functions and operations available in the system are illustrated in Fig. 3 to 12 in which Fig. 3 illustrates a main routine for calling various operational routines, Fig. 4 to 11 illustrate the various operational routines available in the system and Fig. 12 illustrates a specific example for a control flow in relation with automatic rate determination and shipping.

In accordance with the operating sequence of the means provided in the electronic control means 1 as performed by the microcomputer, in order to effect a dispatching operation for shipping the keyboard means 2 is in a first operating mode of the control means 1 initially enabled for entry of data which serve to select the desired receiver address as illustrated in the diagrammatic operating sequence of Fig. 12. There it can be provided that for the purpose of locating the desired receiver only a certain portion of the data stored in the receiver address text section of the information block 13, e. g. the name, a customer code or an abbreviated name, have to be quoted in order to obtain complete access to the information block 13. Alternatively by keyboard actuation a search operation may be triggered in which under control of a certain key of the keyboard 2 the individual information blocks 13 are searched through one after the other to thereby locate the desired information block 13.

When selection of the corresponding information block 13 is completed by a valid entry the keyboard 2 is enabled to enter data which serve to select the desired shipping mode in order to address the corresponding information block 14 of the second storage portion 9. There it can also be provided that entry of an appropriate portion of the information stored in the shipping mode text section of the information block 14 will suffice for location purposes, e. g. entry of a freight carrier name, of an abbreviation or of a code therefor. Retrieval of the desired information block 14 may also be provided by successive search through all information blocks 14 provided in the second storage portion 9.

In response to the selection of the receiver and the shipping mode the control means 1 operates the visual display 5 in such a manner that the information of the receiver address read out from the information block 13 and the information of the shipping mode read out from the information block 14 is respectively displayed on the screen of the visual display 5. There it is further provided that the control means 1 simultaneously displays appropriately designed screen masks on the screen which may for instance be called by access to a further storage portion 17 of the memory means 6. In this way the user gets a clearly arranged and easily understandable visual representation of the information contents selected by him via the keyboard 2, since the screen masks because of their pattern and their supplementary text information explaining the called information contents give an immediately understandable representation of the displayed information in clear text.

The format of the screen masks may be altered under user control. This enables the user to customize the mask formats. Particularly, the screen mask used during input or access to the information blocks 13 of the first storage portion 8 may thereby be accommodated to the type and amount of alphanumeric receiver information the user is intending to store in or access from the optionally provided supplementary information section of this information block 13.

The system further incorporates help functions pertaining to the displayed screen masks. When the user activates a help key on said keyboard the help function is called and within a portion of the displayed mask instructional information on the further steps to be performed and the possible type of data to be entered by the user for further execution of the input sequence pertaining to this screen mask is displayed. The currently activated information line or block of the currently displayed screen mask is sensed by the control means 1 to thereby establish linkage to the associated portions of the help function.

On the basis of the rate code section read out from the information block 14 of the second storage portion 9 the control means 1 accesses the thereby identified information block 15 of the third storage portion 10 and therein retrieves in accordance with the transportation rate table structure as exemplarily described hereinbefore the memory location of the transportation rate table identified by the memory contents of the location code section. There the control means 1 makes a check whether the memory contents of the read-out location code section is associated with exactly one or with several memory locations of the transportation rate table. This may for instance be performed in a specifically simple way by storing those memory locations of the transportation rate table which are associated to one and the same memory contents of the location code section in sequence one after the other so that the control means 1 after selection of the first memory location corresponding to the location code section only needs to check the immediately following memory location to answer the question whether further memory locations having the same location code are present in the negative if the location code associated with this memory location is different, and otherwise to continue to proceed with the inquiry to the next memory location until the condition for answering this question in the negative will occur.

If the occurrence of at least two memory locations of the transportation rate table being identical with respect to the location code is answered in the affirmative, then the control means 1 operates to insert a supplementary mask into the currently displayed screen mask which may contain any subsidiary information for the user, and the various receiver locations and associated transportation rate values corresponding to the same memory contents of the location code section, i. e. to the same zip code, are displayed within said supplementary mask. Simultaneously the keyboard 2 is enabled to select the desired location by its actuation.

The before-described manual selection between two or more memory locations storing transportation rate tables occurs when e. g. the postal code is used as location code while the selected shipping mode has a transportation rate structure associated therewith which has different transportation rate values for different subareas of the area pertaining to one and the same postal code. Manual discrimination between the various subareas may, however, be avoided by the utilization of appropriate user-defined location codes as described hereinbefore. Such user-defined code may e. g. include the postal code supplemented by an extension for distinguishing the subareas. Having thus created a code which implies a one-to-one correspondence between the receiver addresses as identified by receiver location and subarea and the corresponding rate table entries, no manual discrimination is yet necessary and the system automatically performs access to the applicable transportation rate table. The branch of control flow as represented by the query "more than one storage location associated" in Fig. 12 is then no longer required.

After the memory location corresponding to the desired destination location including any subarea identification, if any, has in this way been determined in the information block 15 containing the transportation rate table, the control means 1 accepts the weight value of the piece to be dispatched from the scale 3 and makes access to the cell within the corresponding memory location which is identified by the weight value to thereby read out the applicable transportation rate value. Although in the embodiment illustrated in Fig. 1 the weight entry means is formed by the scale 3 which automatically transmits the weight value to the control means 1 it may alternatively be provided that an optical scanner for a weight information in the form of a bar code applied to the piece to be dispatched is used as weight entry means. It is also possible to design the control means 1 in such a way that a numerical key section of the keyboard means 2 is enabled for receiving the weight value to thereby render a numerical entry of the corresponding weight value possible to the user.

As may be further seen from Fig. 12 the control means 1 now performs a check whether the information block 15 of the third storage portion 10 as accessed by the hitherto performed operating sequence comprises a supplementary information section. These data relating to optional extra services like express delivery, night delivery or the like and to the supplementary rate values applicable therefor are displayed by the control means 1 in a supplementary mask which is inserted into the currently displayed screen mask and serves for the purpose of explanation if by actuation of the keyboard means 2 the request for an extra service is answered in the affirmative. Then the control means 1 enables the keyboard 2 in such a way that the user may select the desired extra service by an appropriate actuation of the keyboard. After the user has selected the desired extra service in this way the corresponding supplementary rate value is added to the ordinary transportation rate value as determined according to the operating sequence described above.

On the basis of the memory address signal read out from the form code section of the information block 14 the control means 1 now selects the one or more information blocks 16 of the fourth storage portion 11 identified thereby and inserts the information concerning the receiver and the transportation rate value and optionally concerning the selected shipping mode as determined in accordance with the above-described operating sequence into empty locations provided in the forms defined by the information blocks 16. Because of the association between shipping mode and form effected by the form code section it is safeguarded that always the one or several right forms for the corresponding shipping mode are selected. The information which is thereby arranged in the respective applicable form format is then output by the control means 1 to the printing means 4 for print-out.

The printing means 4 used for printing in the illustrated embodiment is designed in such a way that a feed for endless form, a batch feed and a feed for single form are arranged at a single printing mechanism. In dependence of the memory contents of the form code section read out in accordance with the processing steps explained above the control means 1 automatically selects the one or more feeds corresponding to the one or more required forms in sequence so that the forms may automatically be produced notwithstanding the fact that different feeds are required in view of the different physical properties of the forms.

Under the operating sequence described above the total amount of dispatching steps required for making pieces to be dispatched ready for shipping to any desired number of receiver addresses on the basis of any desired shipping mode are thereby automatically effected in accordance with a selection to be performed by the user in a simple way. Additionally the operating sequence comprises numerous further functions not explicitly represented in Fig. 12 which further supplement and enhance the flexibility and ease of operation.

For instance it is provided that the control means 1 stores the information supplied to the printing means 4 for print-out partially or as a whole as protocol data in a fifth storage portion 12 of the memory means 2. In response to an actuation of the keyboard 2 these protocol data may then be output at an output terminal of the system. Protocols of all settled shipping operations may hereby be established.

The protocol data are stored in said fifth storage portion 12 in each of information blocks 18 as symbolically represented in Fig. 2(e). Each information block 18 comprises a set of data relating to one individual executed shipping operation. This set of data comprises at least selected items from the memory contents of the receiver address text sections and the shipping mode text sections together with the related transportation rate value. Apart from the receiver address with optional additional information, the selected shipping mode and the transportation rate value the set of data includes a parcel number which is automatically generated by the system for any executed shipping operation. Moreover, the calendar date and optionally day-time of the shipping operation is appended to this data set. For this purpose the system comprises real time generator means in order to automatically supply the calendar date and/or day-time for use with said protocol data.

The protocol data may be accessed via the keyboard 2 under the calendar date or an interval of calendar dates and/or the receiver address and/or the shipping mode. Thereby activity reports for all or selected ones from the group of all receivers or from all permissible shipping modes may be obtained for a desired interval, e. g. on a month-by-month, week-by-week or day-by-day basis or for whatever period the user desires. These reports established on the basis of the protocol data may be displayed on the visual display means 5 or may be output for printing or further processing. In order to allow the user to define both content and format of the desired reports means is provided in the system which allows for the selection of the format and the content of data output in response to corresponding control information entered via the keyboard means 2.

A further function of the control means 1 which may be called by actuation of the keyboard 2 includes that prior to enabling of the printing means 4 the control means 1 in compliance with the operating sequence described with reference to Fig. 3 determines the transportation rate value derived for a certain receiver address and a certain shipping mode additionally for alternative shipping modes to be selected by the keyboard 2 and displays the alternative transportation rate values in a corresponding screen mask. By actuation of the keyboard 2 the user may then select a shipping mode which is optimized with respect to the rate value and cause the printing to occur for the selected optimized shipping mode.

Since it would not be reasonable to compare transportation rate values calculated for shipping modes which are reasonably not taken into consideration in view of the shipping distance or nature of the pieces to be shipped a unique code value is assigned for each shipping mode as defined in the information blocks 14 and a set of code values is stored in each information block 14, said set of code values determining those shipping modes which are to be considered in performing the comparison.

The system is capable of performing various calculations including a calculation of total amounts of transportation fees for all or selected groups of receivers or for selected ones out of the available shipping modes, i. e. available carriers. Particularly it is provided that the system enables calculation of the cubic volume of the pieces to be dispatched from the dimensions thereof.

There exist shipping modes in which the pieces to be dispatched utilize reusable packing material, e. g. reusable containers or pallets. In order to account for the issuing and return of these reusable packing materials a sixth storage portion 19 is provided in the memory means 6. A desired sixth number of information blocks 20 in said sixth storage portion 19 comprises each a set of track-keeping data for each item of reusable packing material used in each shipping operation. Each set of track-keeping data comprises at least a serial number for the packing material to be entered via the keyboard means 2 together with receiver address information automatically transferred from the corresponding information block 13 in the first storage portion 8 on the occasion of performing the shipping operation. Other information like data identifying the type of packing material and information as to the calendar date of issue and return may be included in each of said sets of track-keeping data.

Thereby the status of reusable packing material for each individual shipping operation is stored in one information block 20. In order to access the information the system is operative to retrieve an individual information block 20 in response to entry of identification data via the keyboard means 2. These identification data appropriate for selectively accessing said information blocks 20 may e. g. be the serial number or the receiver. Optionally retrieval may be effected for a certain issue date or interval of issue dates or the like. Instead of individual sets of track-keeping data groups of track-keeping data may be accessed and the individual sets or groups of sets may be displayed or listing thereof may be printed at the printing means 4.

In the operation of the system as described hereinbefore any individual shipping operation requires the user to enter an individual receiver identification and an identification for the desired shipping mode. However, in certain applications it is desirable to send identical items to a predetermined group of receivers. This is e. g. the case with the group of subscribers for some warehouse articles to be delivered to them at regular intervals. The system therefore allows for storing group definition data in each of the information blocks 13 defining the receiver addresses. The user is then only required to enter the corresponding group definition data together with the desired shipping mode and the weight value of the item by the keyboard entry means 2 and the system is responsive thereto for automatically performing the complete shipping operation for all receivers comprised in the selected group.

In the shipping operation including the optional operations as described above it is assumed that for a given user installation the memory means 6 already contains all information with respect to receiver address, shipping mode, transportation rate structure and forms, which information is accessed in the first operating mode of the control means 1. By means of an appropriate actuation of the keyboard means 2 the control means may, however, be put into a second operating mode in which data entered by the keyboard means 2 may selectively be stored into the information blocks 13 to 16 of the storage portions 8 to 11. Thereby it is possible to apply at any time changes and/or supplements via the keyboard 2 to thereby update the memory means 6 with respect to receiver addresses and shipping modes as well as the charge rate tables and forms associated therewith. This is again supported by corresponding screen masks and help functions associated therewith. This second operating mode is especially adapted to changes and/or supplements of a moderate extent. It is therefore of advantage to additionally provide the control means 1 with an input/output interface 7 by means of which any desired storage portion may be programmed with data from an external data source. By means of the external data source which may for instance be a central computer a high amount of information may be entered within a short time which is of high advantage in applications with a large number of receiver addresses.

Especially when programming the first storage portion 8 with receiver address information by input from an external data source like a central computer it is of advantage to simultaneously supply the receiver address information with information indicative of the receiver's preferred mode of shipment and any preferred special services. To enable the information blocks 13 of the first storage portion 8 to accommodate such information an extra code section is provided in each information block 13, and this code section is adapted for storing a code representing the preferred shipping mode and optionally a further code representing a preferred special service like express shipping or the like. With the address information supplemented by the coded information of customers' preferred shipping mode and/or preferred special service the system is then operative to automatically access the preferred shipping mode and/or preferred special service when access is made to the receiver address by the keyboard means 2. Thereby the transportation rate value is calculated and all necessary shipping documents are prepared by the system for the accessed receiver address on the basis of the preferred shipping mode and preferred special service without any need for the user to manually enter a shipping mode and/or special service via the keyboard means 2.

The system is, however, not only capable to receive information for programming the various storage portions from an external data source but includes output interface means for communicating the information contents of at least the information blocks 13 in said first storage portion 8 to external data processing means. Thereby the advantage is attained that the sales information of the information blocks 13, especially receiver address and optionally supplementary information as well as the transportation rate values calculated by the system may be transferred to another computer for automatic creation of invoices.

A seventh storage portion 21 optionally provided in the memory means 6 may include a seventh number of information blocks 22 for storing mass letter information. The system allows for selection of a desired one of these information blocks 22 and is operative to combine the mass letter information stored in the selected information block 22 with an address from an information block 13 in the first storage portion 8 upon selection by the keyboard means 2. The combined address and mass letter information may then be printed by the printing means for dispatch to the desired receivers. This may automatically be done for any selected group of receivers. The information stored in the individual storage blocks 22 of the seventh storage portion 21 may include marked positions to be supplemented by information at correspondingly marked positions in the information blocks 13 of the first storage portion 8. Thereby standard mass letter texts may be caused to include information specific to each receiver in addition to the address.

From the above description it is in particular evident that the system is of high utility for all users which daily dispatch substantial amounts of parcels or other pieces to be shipped as is the case in the shipment of replacement parts by suppliers of such parts, in the shipment of mail-order houses, of manufacturers of various goods, banking houses, insurance companies, governmental authorities and other servicing companies.

### List of Reference Numerals

- 1: electronic control means
- 2: input keyboard means
- 3: scale
- 4: printing means
- 5: visual display means
- 6: memory means
- 7: input/output interface
- 8: first storage portion
- 9: second storage portion
- 10: third storage portion
- 11: fourth storage portion
- 12: fifth storage portion
- 13: information block of first storage portion
- 14: information block of second storage portion
- 15: information block of third storage portion
- 16: information block of fourth storage portion
- 17: additional storage portion
- 18: information block of fifth storage portion
- 19: sixth storage portion
- 20: information block of sixth storage portion
- 21: seventh storage portion
- 22: information block of seventh storage portion

## Claims

1. A system for making pieces to be dispatched ready for shipping comprising weight entry means (3), printing means (4), memory means (6), input keyboard means (2) and electronic control means (1) coupled with said weight entry means, printing means, memory means and input keyboard means,
characterized in that
said memory means (6) comprises
a first storage portion (8) for storing a desired first number of information blocks (13), each of said information blocks (13) comprising a receiver address text section with its memory contents corresponding to a receiver address for the piece to be dispatched,
a second storage portion (9) for storing a desired second number of information blocks (14), each of said information blocks (14) comprising a shipping mode text section with its memory contents corresponding to a predetermined shipping mode, and a form code section, and
a fourth storage portion (11) for storing a desired fourth number of information blocks (16), said information blocks (16) being selectively locatable in correspondence with the memory contents of said form code sections, the memory contents of each of said selectively locatable information blocks (16) corresponding to a predetermined printing form,
and in that said control means (1) comprises
first means having a first operating mode in which in response to actuation of said keyboard means (2) in correspondence with a desired receiver address the corresponding information block (13) of said receiver address in said first storage portion (8) is located and responsive to actuation of said keyboard means (2) in correspondence with a desired shipping mode the information block (14) corresponding to this shipping mode in said second storage portion (9) is located and the memory contents of the form code section are read out, and
third means controlled by said read-out memory contents of the form code section for reading out the corresponding information block (16) of the fourth storage portion (11) and for controlling the printing means (4) to print out the memory contents of the receiver address text section in correspondence with the form format determined by said information block (16) corresponding to said predetermined printing form.

2. A system as claimed in claim 1, characterized in that each of said information blocks (13) in said first storage portion (8) comprises a location code section with its memory contents corresponding to the geographical position of the location of the receiver address, each of said information blocks (14) in said second storage portion (9) comprises a rate code section, said memory means (6) comprising a third storage portion (10) for storing a desired third number of information blocks (15), said information blocks (15) being selectively locatable in correspondence with the memory contents of said rate code sections, the memory contents of each of said selectively locatable information blocks (15) corresponding to a predetermined transportation rate table structure as a function of a weight of the piece to be dispatched and the geographical position of the receiver in relation to the sender, said control means (1) comprising second means controlled by said read-out memory contents of the rate code section and the location code section for locating the corresponding information block (15) of said third storage portion (10) in correspondence with the read-out memory contents of said rate code section and for locating a corresponding memory location of said information block (15) in correspondence with the read-out memory contents of said location code section and a weight value entered by the weight entry means (3) for reading out the corresponding transportation rate value, and said third means being operative to print out the transportation rate value in correspondence with the form format determined by said information block (16) in said fourth storage portion (11).

3. A system as claimed in claim 2, characterized in that at least one information block (15) of said third storage portion (10) comprises at least one supplementary information section, the memory contents of said supplementary information section corresponding to a supplementary rate value for an optional transport service and in that said control means (1) comprises fourth means responsive to said second means for adding a supplementary rate value corresponding to the memory contents of said supplementary information section to said read-out transportation rate value in response to a corresponding actuation of said keyboard means (2).

4. A system as claimed in anyone of claims 2 or 3, characterized in that in at least one information block (15) of said third storage portion (10) at least two of said storage locations corresponding each to a different transportation rate value are located by the same value of the read-out storage contents of the location code section and in that said control means (1) comprises fifth means responsive thereto for selecting exactly one of said memory locations for the determination of the transportation rate value in correspondence with a corresponding actuation of the keyboard means (2).

5. A system as claimed in anyone of claims 2 or 3, characterized in that the information contents of said location code section of said information blocks (13) in said first storage portion (8) is a user-defined code comprising information representative of the postal code for the receiver address and an extension for distinguishing a subarea of the area defined by the postal code information, and that said second means is operative to convert said user-defined location code into appropriate distance information for a distance-related transportation rate table structure in said third storage portion (10).

6. A system as claimed in anyone of claims 1 to 5, characterized in that said memory means (6) comprises a fifth storage portion (12) for storing a desired fifth number of information blocks (18) and said control means (1) comprises sixth means for storing in each information block (18) a set of protocol data, each set comprising at least selected items from the memory contents of the receiver address text sections and the shipping mode text sections together with the respective transportation rate values as printed out under the control of the third means in response to the corresponding entries of said keyboard means, and for outputting said sets of protocol data at an output terminal in response to a corresponding command entered via said keyboard means (2).

7. A system as claimed in claim 6, characterized in that there is provided means for generating real time data representative of the current calendar date and, optionally, the current day-time, and that said sixth means stores each set of said protocal data in association with the current value of said real time data.

8. A system as claimed in anyone of claims 6 or 7, characterized in that said control means (1) comprises seventh means being operative to selectively access groups of said sets of protocol data for display and/or print-out in response to data representative of receiver address text information and/or shipping mode text information and/or real time data information entered by said input keyboard means (2) identifying the members of said group.

9. A system as claimed in claim 8, characterized in that said sixth means is responsive to control information entered via said keyboard means (2) for determining the format and/or contents of the information displayed and/or printed out from the accessed sets of protocol data.

10. A system as claimed in anyone of claims 1 to 9, characterized in that said control means (1) has a visual display means (5) connected thereto for displaying the information contents of the information block (13) of the first storage portion (8) and/or of the information block (14) of the second storage portion (9) as located by said first means.

11. A system as claimed in claim 10, characterized in that said control means (1) includes means for displaying predetermined masks on the screen of said visual display means to display the information contents of said information blocks embedded within said masks.

12. A system as claimed in claim 11, characterized in that said control means (1) includes means for altering the mask format under user control in compliance with associated control characters entered via said keyboard means (2).

13. A system as claimed in anyone of claims 11 or 12, characterized in that said means for generating said masks for said visual display is operative to insert auxiliary masks in response to a corresponding actuation of the keyboard means (2), at least one of said auxiliary masks being used for displaying the memory contents of the supplementary information section of said information blocks (15) in said third storage portion (10) in response to actuation of said fourth means.

14. A system as claimed in anyone of claims 11 to 13, characterized in that said means for generating said masks on said screen of said visual display means is operative to insert auxiliary masks in response to a corresponding actuation of the keyboard means (2), at least one of said auxiliary masks being used for displaying the memory contents of those receiver address text sections associated to the same value of the read-out memory contents of the location code section in response to operation of said fifth means.

15. A system as claimed in anyone of claims 11 to 14, characterized in that said control means (1) is operative to sense the currently activated information field of the currently displayed mask on the screen expecting input via said keyboard means and upon actuation of a help key of said keyboard means displays an information of all allowable types of input information for said field on a portion of the display screen.

16. A system as claimed in anyone of claims 10 to 15, characterized in that said control means (1) comprises seventh means for causing said first and said second means to determine the transportation rate value for at least one further shipping mode and to display the transportation rates corresponding to said different shipping modes in a corresponding mask on the screen in response to a corresponding actuation of the keyboard means (2).

17. A system as claimed in claim 16, characterized in that each of said information blocks (14) in said second storage portion (9) comprises a set of code values, one code value of this set being representative of the individual shipping mode defined by this information block and the others being selected ones from the codes representing the individual shipping modes defined by the other information blocks (14), said seventh means being operative to calculate and display the transportation rates of shipping modes associated to said set of code values for performing said comparison.

18. A system according to anyone of claims 1 to 17, characterized in that in said first operation mode said first means initially enables said keyboard means (2) for entry of the key actuation which serves to locate the information block (13) in the first storage portion (8) and subsequently enables said keyboard means (2) for entry of the key actuation which serves to locate the information block (14) in the second storage portion (9).

19. A system as claimed in anyone of claims 1 to 18, characterized in that said memory means (6) comprises a sixth storage portion (19) for storing a desired sixth number of information blocks (20), and said control means (1) comprises eighth means for storing in each information block (20) a set of track keeping data for reusable packing material as used with the piece to be dispatched, each set comprising at least a serial number of the packing material entered via said keyboard means (2) and receiver address information from the corresponding information block (13) in the first storage portion (8).

20. A system as claimed in claim 19, characterized in that said eighth means is operative to access selected ones of said information blocks (20) in said sixth storage portion (19) for display and/or print-out in response to entry of at least portions of said track keeping data via said keyboard means (2).

21. A system as claimed in anyone of claims 1 to 20, characterized in that said control means (1) comprises means for calculating the cubic volume of the piece to be dispatched from the dimensions thereof.

22. A system as claimed in anyone of claims 1 to 21, characterized in that said first means comprises a second operating mode in which input data entered by said keyboard means (2) are selectively stored in information blocks (13 to 16) of the storage portions (8 to 11), said second operating mode being enabled by a corresponding actuation of the keyboard means (2).

23. A system as claimed in anyone of claims 1 to 22, characterized in that said control means (1) comprises input/output interface means (7) for reading in data from an external data source into desired storage portions (8 to 11).

24. A system as claimed in anyone of claims 1 to 23, characterized in that each of said information blocks (13) in said first storage portion (8) comprises a code section adapted for storing a code representative of a shipping mode selected from the set of shipping modes defined by said information blocks (14) in said second storage portion (9), said selected shipping mode being a preferred one for the receiver identified by the receiver address text section of the respective information block (13) in said first storage portion (8), and that said control means (1) is operative to automatically locate the corresponding information block (14) in said second storage portion (9) in response to locating the information block (13) in said first storage portion (8).

25. A system as claimed in anyone of claims 1 to 24, characterized in that each of said information blocks (13) in said first storage portion (8) comprises a group definition section adapted for storing group definition data and in that said control means (1) is responsive to entry of each one of said group definition data together with a desired shipping mode information and a weight value to cause said first, second and third means to automatically locate all information blocks (13) identified by said entered group definition data, determine the applicable transportation rate value for the entered shipping mode and weight value and print the applicable shipping forms for all members in the group.

26. A system as claimed in anyone of claims 1 to 25, characterized in that each of said information blocks (13) in said first storage portion (8) comprises a supplementary information section adapted for storing additional information other than receiver address information.

27. A system as claimed in claim 26, characterized in that said control means comprises output interface means for communicating the information contents of said information blocks (13) in said first storage portion (8) when being selected by said keyboard means (2) to external data processing means.

28. A system as claimed in anyone of claims 1 to 27, characterized in that said memory means (6) comprises a seventh storage portion (21) for storing a desired seventh number of information blocks (22), each of said information blocks being adapted for storing mass letter information and in that said control means (1) comprises ninth means being responsive to selection of one of said information blocks (22) in said seventh storage portion (21) by said keyboard entry means (2) for causing said printing means to print the contents of the selected information block (22) for all or a selected group of receiver addresses stored in said first storage portion (8) when selected by said keyboard means (2).

29. A system as claimed in claim 28, characterized in that said ninth means is operative to supplement the information of the accessed information block (22) in said seventh storage portion (21) at marked positions by correspondingly marked information portions from the information blocks (13) in said first storage portion (8) when displaying and/or printing the supplemented information.

30. A system as claimed in anyone of claims 1 to 29, characterized in that said printing means (4) comprises an endless form feed, a batch feed and a single form feed and in that said third means automatically selects the individual feeds in correspondence with the read-out memory contents of the form code section.

31. A system as claimed in anyone of claims 1 to 30, characterized in that said weight entry means is a scale (3) generating an electrical output signal which corresponds to the weight of the piece to be shipped.

32. A system as claimed in anyone of claims 1 to 30, characterized in that said weight entry means is a light scanner for scanning bar-coded weight information.

33. A system as claimed in anyone of claims 1 to 30, characterized in that said weight entry means is formed by a numeric key section provided on said keyboard means (2).

34. A system as claimed in anyone of claims 1 to 33, characterized in that said control means (1) is formed by a microprocessor.

## Patentansprüche

1. System zur Versandabfertigung von Packstücken mit einer Gewichtseingabeeinrichtung (3), einer Druckereinrichtung (4), einer Speichereinrichtung (6), einer Eingabetastatureinrichtung (2) und einer mit der Gewichtseingabeeinrichtung, der Druckereinrichtung, der Speichereinrichtung und der Eingabetastatureinrichtung gekoppelten Steuereinrichtung, dadurch gekennzeichnet,
daß die Speichereinrichtung (6) aufweist
einen ersten Speicherbereich (8) zum Speichern einer gewünschten ersten Anzahl von Informationsblöcken (13), wobei jeder der Informationsblöcke (13) einen EmpfängeradressenTextabschnitt, dessen Speicherinhalt einer Empfängeradresse für das Packstück entspricht, aufweist,
einen zweiten Speicherbereich (9) zum Speichern einer gewünschten zweiten Anzahl von Informationsblöcken (14), wobei jeder der Informationsblöcke (14) einen Versandart-Textabschnitt, dessen Speicherinhalt einer bestimmten Versandart entspricht, und einen Formularcode aufweist, und
einen vierten Speicherbereich (11) zum Speichern einer gewünschten vierten Anzahl von Informationsblöcken (16), wobei die Informationsblöcke (16) entsprechend dem Speicherinhalt der Formularcodeabschnitte selektiv ansteuerbar sind und der Speicherinhalt jedes der selektiv ansteuerbaren Informationsblöcke einem bestimmten Druckformular entspricht,
und dadurch, daß die Steuereinrichtung (1) aufweist
eine erste Einrichtung mit einer ersten Betriebsart, mit der ansprechend auf eine Betätigung der Tastatureinrichtung (2) entsprechend einer gewünschten Empfängeradresse der dieser Empfängeradresse entsprechende Informationsblock (13) im ersten Speicherbereich (8) angesteuert wird und ansprechend auf eine Betätigung der Tastatureinrichtung (2) entsprechend einer gewünschten Versandart der dieser Versandart entsprechende Informationsblock (14) im zweiten Speicherbereich (9) angesteuert wird und der Speicherinhalt des Formularcodeabschnitts ausgelesen wird, und
eine von dem ausgelesenen Speicherinhalt des Formularcodeabschnitts gesteuerte dritte Einrichtung zum Auslesen des entsprechenden Informationsblocks (16) aus dem vierten Speicherbereich (11) und zum Steuern der Druckereinrichtung (4) zum Ausdrucken des Speicherinhalts des Empfängeradressen-Textabschnitts entsprechend dem von dem Informationsblock (16) festgelegten, dem bestimmten Druckformular entsprechenden Formularformat.

2. System nach Anspruch 1, dadurch gekennzeichnet, daß jeder der Informationsblöcke (13) im ersten Speicherbereich (8) einen Ortscodeabschnitt aufweist, dessen Speicherinhalt der geographischen Lage des Ortes der Empfängeradresse entspricht, daß jeder der Informationsblöcke (14) im zweiten Speicherbereich (9) einen Gebührencodeabschnitt aufweist, die Speichereinrichtung (6) einen dritten Speicherbereich (10) zum Speichern einer gewünschten dritten Anzahl von Informationsblöcken (15) aufweist, wobei die Informationsblöcke (15) entsprechend dem Speicherinhalt der Gebührencodeabschnitte selektiv ansteuerbar sind, der Speicherinhalt der selektiv ansteuerbaren Informationsblöcke (15) einer vom Gewicht des Packstücks und der geographischen Lage des Empfängers bezüglich des Absenders abhängigen, festgelegten Versandgebührentabellenstruktur entspricht, die Steuereinrichtung (1) eine von dem ausgelesenen Speicherinhalt des Gebührencodeabschnitts und des Ortscodeabschnitts gesteuerte zweite Einrichtung aufweist zum Ansteuern des entsprechenden informationsblocks (15) des dritten Speicherbereichs (10) entsprechend dem ausgelesenen Speicherinhalt des Gebührencodeabschnitts und zum Ansteuern einer entsprechenden Speicherstelle des Informationsblocks (15) entsprechend dem ausgelesenen Speicherinhalt des Ortscodeabschnitts und einem über die Gewichtseingabeeinrichtung (3) eingegebenen Gewichtswert zum Auslesen des entsprechenden Versandgebührenwerts und die dritte Einrichtung zum Ausdrucken des Versandgebührenwerts entsprechend dem vom Informationsblock (16) im vierten Speicherbereich (11) festgelegten Formularformat aktivierbar ist.

3. System nach Anspruch 2, dadurch gekennzeichnet, daß zumindest ein Informationsblock (15) des dritten Speicherbereichs (10) mindestens einen zusätzlichen Informationsabschnitt aufweist, wobei der Speicherinhalt des zusätzlichen Informationsabschnitts einem Zusatzgebührenwert für eine Sonderversandleistung entspricht, und dadurch, daß die Steuereinrichtung (1) eine auf die zweite Einrichtung ansprechende vierte Einrichtung aufweist zum Addieren eines Zusatzgebührenwertes entsprechend dem Speicherinhalt des zusätzlichen Informationsabschnitts zum ausgelesenen Transportgebührenwert, ansprechend auf eine entsprechende Betätigung der Tastatureinrichtung (2).

4. System nach einem der Ansprüche 2 oder 3, dadurch gekennzeichnet, daß in mindestens einem Informationsblock (15) des dritten Speicherbereichs (10) mindestens zwei der je einen unterschiedlichen Versandgebührenwert entsprechenden Speicherstellen durch denselben Wert des ausgelesenen Speicherinhalts des Ortscodeabschnitts angesteuert werden, und daß die Steuereinrichtung (1) eine darauf ansprechende fünfte Einrichtung aufweist, mit der zum Bestimmen des Transportgebührenwertes entsprechend einer entsprechenden Betätigung der Tastatureinrichtung (2) genau eine der Speicherstellen auswählbar ist.

5. System nach einem der Ansprüche 2 oder 3, dadurch gekennzeichnet, daß der Informationsinhalt des Ortscodeabschnitts des Informationsblocks (13) im ersten Speicherbereich (8) ein eine dem Postzustellcode für die Empfängeradresse darstellende Information und eine Erweiterung zum Unterscheiden eines Untergebiets des von der Postzustellcodeinformation bestimmten Gebiets aufweisender, vom Anwender festgelegter Code ist, und daß die zweite Einrichtung zum Umwandeln des vom Anwender festgelegten Ortscodes in eine passende Entfernungsinformation für eine entfernungsbezogene Versandgebührtabellenstruktur im dritten Speicherbereich (10) aktivierbar ist.

6. System nach einem der Anprüche 1 bis 5, dadurch gekennzeichnet, daß die Speichereinrichtung (6) einen fünften Speicherbereich (12) zum Speichern einer gewünschten fünften Anzahl von Informationsblöcken (18) aufweist und daß die Steuereinrichtung (1) eine sechste Einrichtung zum Speichern eines Protokolldatensatzes in jeden der Informationsblöcke (18) aufweist, wobei jeder Satz zumindest ausgewählte Einzelheiten aus den Speicherinhalten der Empfängeradressen-Textabschnitte und der Versandart-Textabschnitte zusammen mit den unter der Steuerung der dritten Einrichtung ansprechend auf die entsprechenden Eingaben der Tastatureinrichtung ausgedruckten, jeweiligen Versandgebührenwerte aufweist, und zum Ausgeben der Protokolldatensätze an einen Ausgabeanschluß ansprechend auf einen über die Tastatureinrichtung (2) eingegebenen, entsprechenden Befehl.

7. System nach Anspruch 6, dadurch gekennzeichnet, daß eine Einrichtung zum Erzeugen von das aktuelle Kalenderdatum und wahlweise die aktuelle Tageszeit darstellenden Echtzeitdaten vorgesehen ist und daß die sechste Einrichtung jeden Protokolldatensatz zusammen mit dem aktuellen Wert der Echtzeitdaten speichert.

8. System nach einem der Ansprüche 6 oder 7, dadurch gekennzeichnet, daß die Steuereinrichtung (1) eine zum selektiven Zugreifen auf Gruppen der Protokolldatensätze aktivierbare siebte Einrichtung aufweist zum Anzeigen und/oder Ausdrucken, ansprechend auf über die Eingabetastatureinrichtung (2) eingegebene, die Mitglieder der Gruppe identifizierende, Empfängeradressen-Textinformation und/oder Versandart-Textinformation und/oder Echtzeit-Dateninformation darstellende Daten.

9. System nach Anspruch 8, dadurch gekennzeichnet, daß die sechste Einrichtung auf über die Tastatureinrichtung (2) eingegebene Steuerinformation anspricht zum Festlegen des Formats und/oder Inhalts der angezeigten und/oder ausgedruckten Information aus den Protokolldatensätzen, auf die zugegriffen wurde.

10. System nach einem der Ansprüche 1 bis 9, dadurch gekennzeichnet, daß die Steuereinrichtung (1) eine damit verbundene Sichtanzeigeeinrichtung (5) aufweist zum Anzeigen der Informationsinhalte des Informationsblocks (13) des ersten Speicherbereichs (8) und/oder des Informationsblocks (14) des zweiten Speicherbereichs (9) entsprechend einer Ansteuerung durch die erste Einrichtung.

11. System nach Anspruch 10, dadurch gekennzeichnet, daß die Steuereinrichtung (1) eine Einrichtung zum Anzeigen festgelegter Masken auf dem Bildschirm der Sichtanzeigeeinrichtung enthält zum Anzeigen des Informationsinhalts der Informationsblöcke eingefügt innerhalb der Masken.

12. System nach Anspruch 11, dadurch gekennzeichnet, daß die Steuereinrichtung (1) eine Einrichtung zum Ändern des Maskenformats unter Anwendersteuerung gemäß über die Tastatureinrichtung (2) eingegebene und dazu passende Steuerzeichen enthält.

13. System nach einem der Ansprüche 11 oder 12, dadurch gekennzeichnet, daß die Einrichtung zum Erzeugen der Masken für die Sichtanzeigen ansprechend auf eine entsprechende Betätigung der Tastatureinrichtung zum Einblenden von Hilfsmasken aktivierbar ist, wobei mindestens eine der Hilfsmasken ansprechend auf eine Betätigung der vierten Einrichtung zum Anzeigen des Speicherinhalts des zusätzlichen Informationsabschnitts des Informationsblocks (15) im dritten Speicherbereich (10) benutzt wird.

14. System nach einem der Ansprüche 11 bis 13, dadurch gekennzeichnet, daß die Einrichtung zum Erzeugen der Masken auf dem Bildschirm der Sichtanzeigeeinrichtung zum Einblenden von Hilfsmasken ansprechend auf eine entsprechende Betätigung der Tastatureinrichtung (2) aktivierbar ist, wobei mindestens eine Hilfsmaske ansprechend auf eine entsprechende Aktivierung der fünften Einrichtung zur Anzeige der Speicherinhalte der zum selben Wert des ausgelesenen Speicherinhaltes des Ortscodeabschnitts gehörenden Empfängeradressen-Textabschnitte dient.

15. System nach einem der Ansprüche 11 bis 14, dadurch gekennzeichnet, daß die Steuereinrichtung (1) zum Erkennen des aktuell, aktivierten Informationsfeldes der aktuell angezeigten Maske auf dem Bildschirm in Erwartung einer Eingabe über die Tastatureinrichtung aktivierbar ist und nach Betätigung einer Hilfetaste der Tastatureinrichtung eine Information über alle verfügbaren Eingabeinformationstypen für dieses Feld auf einem Bereich des Anzeigebildschirms anzeigt.

16. System nach einem der Ansprüche 10 bis 15, dadurch gekennzeichnet, daß die Steuereinrichtung (1) eine siebte Einrichtung aufweist, mit der ansprechend auf eine entsprechende Betätigung der Tastatureinrichtung (2) die erste und zweite Einrichtung zur Bestimmung des Versandgebührenwertes für mindestens eine weitere Versandart veranlaßt werden und zum Anzeigen der den verschiedenen Versandarten entsprechenden Versandgebühren in einer entsprechenden Maske auf dem Bildschirm wird.

17. System nach Anspruch 16, dadurch gekennzeichnet, daß jeder der Informationsblöcke (14) im zweiten Speicherbereich (9) einen Satz von Codewerten aufweist, wobei ein Codewert dieses Satzes die von diesem Informationsblock bestimmte, individuelle Versandart darstellt und die anderen aus den die von den anderen Informationsblöcken (14) festgelegten individuellen Versandarten darstellenden Codes ausgewählte sind, wobei die siebte Einrichtung zur Durchführung eines Vergleichs zum Berechnen und Anzeigen der Versandgebühren der zu den Codewertsätzen gehörigen Versandarten aktivierbar ist.

18. System nach einem der Ansprüche 1 bis 17, dadurch gekennzeichnet, daß die erste Einrichtung in der ersten Betriebsart am Anfang die Tastatureinrichtung (2) zum Eingeben der zum Ansteuern des Informationsblocks (13) im ersten Speicherbereich (8) dienenden Tastenbetätigung freigibt und danach die Tastatureinrichtung (2) zum Eingeben der zum Ansteuern des Informationsblocks (14) im zweiten Speicherbereich (9) dienenden Tastenbetätigung freigibt.

19. System nach einem der Ansprüche 1 bis 18, dadurch gekennzeichnet, daß die Speichereinrichtung (6) einen sechsten Speicherbereich (19) zum Speichern einer gewünschten sechsten Anzahl von Informationsblöcken (20) aufweist und die Steuereinrichtung (1) eine achte Einrichtung zum Abspeichern eines Satzes von Versandwegbuchführungsdaten für für das Packstück verwendetes, wiederverwertbares Verpackungsmaterial in jeden Informationsblock (20) aufweist, wobei jeder Satz mindestens eine über die Tastatureinrichtung (2) eingegebene Seriennummer des Packungsmaterials und Empfängeradresseninformation aus dem entsprechenden Informationsblock (13) im ersten Speicherbereich (8) aufweist.

20. System nach Anspruch 19, dadurch gekennzeichnet, daß die achte Einrichtung ansprechend auf eine mindestens Teile der Versandwegbuchführungsdaten betreffende Eingabe über die Tastatureinrichtung (2) zum Zugreifen auf ausgewählte Informationsblöcke (20) im sechsten Speicherbereich (19) zum Anzeigen und/oder Ausdrucken aktivierbar ist.

21. System nach einem der Ansprüche 1 bis 20, dadurch gekennzeichnet, daß die Steuereinrichtung (1) eine Einrichtung zum Berechnen des Raumvolumens des Packstückes aus den Abmessungen davon aufweist.

22. System nach einem der Ansprüche 1 bis 21, dadurch gekennzeichnet, daß die erste Einrichtung eine zweite Betriebsart aufweist, in der über die Tastatureinrichtung (2) eingegebene Eingabedaten selektiv in Informationsblöcke (13 bis 16) der Speicherbereiche (8 bis 11) gespeichert werden, wobei die zweite Betriebsart über eine entsprechende Betätigung der Tastatureinrichtung (2) freigegeben wird.

23. System nach einem der Ansprüche 1 bis 22, dadurch gekennzeichnet, daß die Steuereinrichtung (1) eine Eingabe/Ausgabe-Schnittstelle (7) aufweist, mit der in gewünschte Speicherbereiche (8 bis 11) Daten aus einer externen Datenquelle eingelesen werden können.

24. System nach einem der Ansprüche 1 bis 23, dadurch gekennzeichnet, daß jeder der Informationsblöcke (13) im ersten Speicherbereich (8) einen zum Speichern eines Codes geeigneten Codeabschnitt aufweist, wobei der Code eine aus dem von den Informationsblöcken (14) im zweiten Speicherbereich (9) festgelegten Versandartsatz ausgewählte Versandart darstellt, wobei die ausgewählte Versandart für den über den Empfängeradressen-Textabschnitt des jeweiligen Informationsblocks (13) im ersten Speicherbereich (8) identifizierten Empfänger bevorzugt ist, und daß die Steuereinrichtung (1) ansprechend auf eine Ansteuerung des Informationsblocks (13) im ersten Speicherbereich (8) zum automatischen Ansteuern des entsprechenden Informationsblocks (14) im zweiten Speicherbereich (9) aktivierbar ist.

25. System nach einem der Ansprüche 1 bis 24, dadurch gekennzeichnet, daß jeder der Informationsblöcke (13) im ersten Speicherbereich (8) einen zum Speichern von Gruppeninformationsdaten geeigneten Gruppendefinitionsabschnitt aufweist und daß die Steuereinrichtung (1) auf eine Eingabe jeweiliger Gruppendefinitonsdaten zusammen mit einer gewünschten Versandartinformation und einem Gewichtswert anspricht, um zu veranlassen, daß die erste, zweite und dritte Einrichtung automatisch alle über die eingegebenen Gruppeninformationsdaten identifizierten Informationsblöcke ansteuert, den anwendbaren Versandgebührenwert für die eingegebene Versandart und den eingegebenen Gewichtswert bestimmt und die anwendbaren Versandformulare für alle Mitglieder der Gruppe ausdruckt.

26. System nach einem der Ansprüche 1 bis 25, dadurch gekennzeichnet, daß jeder der Informationsblöcke (13) im ersten Speicherbereich (8) einen zum Speichern sich von der Empfängeradresseninformation unterscheidender zusätzlicher Information geeigneten zusätzlichen Informationsabschnitt aufweist.

27. System nach Anspruch 26, dadurch gekennzeichnet, daß die Steuereinrichtung eine Ausgabeschnittstelle aufweist zum Übermitteln der Informationsinhalte der Informationsblöcke (13) im ersten Speicherbereich (8) an eine externe Datenverarbeitungseinrichtung wenn diese über die Tastatureinrichtung (2) ausgewählt sind.

28. System nach einem der Ansprüche 1 bis 27, dadurch gekennzeichnete, daß die Speichereinrichtung (6) einen siebten Speicherbereich (21) zum Speichern einer gewünschten siebten Anzahl von Informationsblöcken (22) aufweist, wobei jeder der Informationsblöcke zum Speichern von Massenbriefinformation geeignet ist, und daß die Steuereinrichtung (1) eine auf eine Auswahl eines der Informationsblöcke (22) im siebten Speicherbereich (21) über die Tastatureingabeeinrichtung (2) ansprechende neunte Einrichtung aufweist, mit der die Druckereinrichtung zum Ausdrucken des Inhalts des ausgewählten Informationsblocks (22) für alle oder eine ausgewählte Gruppe von Empfängeradressen, die im ersten Speicherbereich (8) gespeichert sind veranlaßt werden kann, wenn das über die Tastatureinrichtung (2) gewählt wird.

29. System nach Anspruch 28, dadurch gekennzeichnet, daß die neunte Einrichtung zum Ergänzen der Information des Informationsblocks (22) im siebten Speicherbereich (21), auf den zugegriffen wurde, an markierten Positionen um entsprechend markierte Informationsbereiche aus den Informationsblöcken (13) im ersten Speicherbereich (8) beim Anzeigen und/oder Ausdrucken der ergänzten Information aktivierbar ist.

30. System nach einem der Ansprüche 1 bis 29, dadurch gekennzeichnet, daß die Druckereinrichtung einen Endlospapiereinzug, einen Stapeleinzug und einen Einzelblatteinzug aufweist und daß die dritte Einrichtung die einzelnen Einzüge entsprechend den ausgelesenen Speicherinhalten des Formularcodeabschnitts selektiv auswählt.

31. System nach einem der Ansprüche 1 bis 30, dadurch gekennzeichnet, daß die Gewichtseingabeeinrichtung eine ein dem Gewicht des Packstücks entsprechendes, elektrisches Ausgabesignal erzeugende Waage (3) ist.

32. System nach einem der Ansprüche 1 bis 30, dadurch gekennzeichnet, daß die Gewichtseingabeeinrichtung ein der Abtastung einer strichcodierten Gewichtsinformation dienender Lichtabtaster ist.

33. System nach einem der Ansprüche 1 bis 30, dadurch gekennzeichnet, daß die Gewichtseingabeeinrichtung von einem auf der Tastatureinrichtung (2) vorgesehenen numerischen Tastenfeld gebildet ist.

34. System nach einem der Ansprüche 1 bis 33, dadurch gekennzeichnet, daß die Steuereinrichtung (1) von einem Mikroprozessor gebildet ist.

## Revendications

1. Système pour permettre à des objets d'être préparés en vue d'une expédition, comprenant des moyens d'entrée de poids (3), des moyens d'impression (4), des moyens de mémoire (6), des moyens d'entrée à clavier (2) et des moyens électroniques de commande (1) couplés auxdits moyens d'entrée de poids, moyens d'impression, moyens de mémoire et moyens d'entrée à clavier,
caractérisé en ce que
lesdits moyens de mémoire (6) comprennent
une première portion de stockage (8) pour stocker un premier nombre souhaité de blocs d'informations (13), chacun desdits blocs d'informations (13) comprenant une section de texte d'adresse de destinataire dont le contenu de mémoire correspond à une adresse de destinataire pour l'objet à expédier,
une deuxième portion de stockage (9) pour stocker un deuxième nombre souhaité de blocs d'informations (14), chacun desdits blocs d'informations (14) comprenant une section de texte de mode d'expédition dont le contenu de mémoire correspond à un mode prédéterminé d'expédition, et une section de code de formulaire, et
une quatrième portion de stockage (11) pour stocker un quatrième nombre souhaité de blocs d'informations (16), lesdits blocs d'informations (16) pouvant être positionnés de manière sélective en correspondance avec le contenu de mémoire desdites sections de code de formulaire, le contenu de mémoire de chacun desdits blocs d'informations (16) pouvant être positionnés de manière sélective correspondant à un formulaire prédéterminée d'impression,
et en ce que lesdits moyens de commande (1) comprennent
des premiers moyens ayant un premier mode de fonctionnement dans lequel, en réponse à la manoeuvre desdits moyens de clavier (2) en correspondance avec une adresse souhaitée de destinataire, le bloc correspondant d'informations (13) de ladite adresse de destinataire dans ladite première portion de stockage (8) est localisé et est sensible à une manoeuvre desdits moyens de clavier (2) en correspondance avec un mode souhaité d'expédition, le bloc d'informations (14) correspondant à ce mode d'expédition dans ladite deuxième portion de stockage (9) est localisé et le contenu de mémoire de la section de code de formulaire est lu, et
des troisièmes moyens commandés par ledit contenu lu de mémoire de la section de code de formulaire pour lire le bloc correspondant d'informations (16) de la quatrième portion de stockage (11) et pour commander aux moyens d'impression (4) d'imprimer le contenu de mémoire de la section de texte d'adresse de destinataire en correspondance avec le format de formulaire déterminé par ledit bloc d'informations (16) correspondant audit formulaire prédéterminé d'impression.

2. Système selon la revendication 1, caractérisé en ce que chacun desdits blocs d'informations (13) dans ladite première portion de stockage (8) comprend une section de code de localité dont le contenu de mémoire correspond à la position géographique de l'adresse du destinataire, chacun desdits blocs d'informations (14) dans ladite deuxième portion de stockage (9) comprend une section de code de prix, lesdits moyens de mémoire (6) comprennent une troisième portion de stockage (10) pour stocker un troisième nombre souhaité de blocs d'informations (15), lesdits blocs d'informations (15) pouvant être positionnés de manière sélective en correspondance avec le contenu de mémoire desdites sections de code de prix, le contenu de mémoire de chacun desdits blocs d'informations (15) pouvant être positionné de manière sélective correspondant à une structure prédéterminée de barème de prix de transport en fonction du poids de l'objet à expédier et de la position géographique du destinataire par rapport à l'expéditeur, lesdits moyens de commande (1) comprenant des deuxièmes moyens commandés par ledit contenu lu de mémoire de la section de code de prix et de la section de code de localité pour positionner le bloc correspondant d'informations (15) de ladite troisième portion de stockage (10) en correspondance avec le contenu lu de mémoire de ladite section de code de prix et pour positionner un emplacement correspondant de mémoire dudit bloc d'informations (15) en correspondance avec le contenu lu de mémoire de ladite section de code de localité, et une valeur de poids entrée par les moyens d'entrée de poids (3) pour lire la valeur correspondante de prix de transport, et lesdits troisièmes moyens pouvant fonctionner pour imprimer la valeur de prix de transport en correspondance avec le format de formulaire déterminé par ledit bloc d'informations (16) dans ladite quatrième portion de stockage (11).

3. Système selon la revendication 2, caractérisé en ce qu'au moins un bloc d'informations (15) de ladite troisième portion de stockage (10) comprend au moins une section d'informations supplémentaires, le contenu de mémoire de ladite section d'informations supplémentaires correspondant à une valeur de supplément de prix pour un service facultatif de transport et en ce que lesdits moyens de commande (1) comprennent des quatrièmes moyens répondant auxdits deuxièmes moyens pour ajouter une valeur de supplément de prix correspondant au contenu de mémoire de ladite section d'informations supplémentaires à ladite valeur lue de prix de transport en réponse à une manoeuvre correspondante desdits moyens de clavier (2).

4. Système selon l'une quelconque des revendications 2 ou 3, caractérisé en ce que dans au moins un bloc d'informations (15) de ladite troisième portion de stockage (10) au moins deux desdits emplacements de stockage correspondant chacun à une valeur différente de prix de transport sont positionnés par la même valeur du contenu lu de stockage de la section de code de localité, et en ce que lesdits moyens de commande (1) comprennent des cinquièmes moyens qui leur répondent pour sélectionner exactement un desdits emplacements de mémoire pour la détermination de la valeur de prix de transport en correspondance avec une manoeuvre correspondante des moyens de clavier (2).

5. Système selon l'une quelconque des revendications 2 ou 3, caractérisé en ce que le contenu d'informations de ladite section de code de localité desdits blocs d'informations (13) dans ladite première portion de stockage (8) est un code défini par l'utilisateur comprenant des informations représentant le code postal pour l'adresse du destinataire et un extension pour désigner une zone partielle de la zone définie par les informations de code postal, et que lesdits deuxièmes moyens peuvent fonctionner pour convertir ledit code défini par l'utilisateur en des informations appropriées de distance pour une structure de barème de prix de transport basée sur la distance dans ladite troisième portion de stockage (10).

6. Système selon l'une quelconque des revendications 1 à 5, caractérisé en ce que lesdits moyens de mémoire (6) comprennent une cinquième portion de stockage (12) pour stocker un cinquième nombre souhaité de blocs d'informations (18) et que lesdits moyens de commande (1) comprennent des sixièmes moyens pour stocker dans chaque bloc d'informations (18) un ensemble de données de protocole, chaque ensemble comprenant au moins des éléments sélectionnés dans le contenu de mémoire des sections de texte d'adresse de destinataire et des sections de texte de mode d'expédition en même temps que les valeurs correspondantes de prix de transport telles qu'imprimées sous la commande des troisièmes moyens en réponse aux entrées correspondantes desdits moyens de clavier, et pour envoyer lesdits ensembles de données de protocole à un terminal de sortie en réponse à une commande correspondante entrée par l'intermédiaire desdits moyens de clavier (2).

7. Système selon la revendication 6, caractérisé en ce qu'il est prévu des moyens pour produire des données en temps réel représentant la date calendaire courante et, facultativement, le jour et l'heure courante, et que lesdits sixièmes moyens stockent chaque ensemble desdites données de protocole en association avec la valeur courante desdites données en temps réel.

8. Système selon l'une quelconque des revendications 6 ou 7, caractérisé en ce que lesdits moyens de commande (1) comprennent des septièmes moyens pouvant fonctionner pour accéder sélectivement à des groupes desdits ensembles de données de protocole pour un affichage et/ou une impression, en réponse à des données représentant des informations de texte d'adresse de destinataire et/ou des informations de texte de mode d'expédition et/ou des informations de données en temps réel entrées par lesdits moyens de clavier (2) identifiant les membres dudit groupe.

9. Système selon la revendication 8, caractérisé en ce que lesdits sixièmes moyens répondent à des informations de commande entrées par l'intermédiaire desdits moyens de clavier (2) pour déterminer le format et/ou le contenu des informations affichées et/ou imprimées à partir des ensembles accédés de données de protocole.

10. Système selon l'une quelconque des revendications 1 à 9, caractérisé en ce que lesdits moyens de commande (1) ont des moyens d'affichage visuel (5) reliés à eux pour afficher le contenu d'informations du bloc d'informations (13) de la première portion de stockage (8) et/ou du bloc d'informations (14) de la deuxième portion de stockage (9) tel que positionnés par lesdits premiers moyens.

11. Système selon la revendication 10, caractérisé en ce que lesdits moyens de commande (1) comprennent des moyens pour afficher des masques prédéterminés sur l'écran desdits moyens d'affichage visuel (5) afin d'afficher le contenu d'informations desdits blocs d'informations incorporés dans lesdits masques.

12. Système selon la revendication 11, caractérisé en ce que lesdits moyens de commande (1) comprennent des moyens pour modifier le format de masque à la demande d'un utilisateur en fonction de caractères associés de commande entrés par l'intermédiaire desdits moyens de clavier (2).

13. Système selon l'une quelconque des revendications 11 ou 12, caractérisé en ce que lesdits moyens pour produire lesdits masques pour ledit affichage visuel peuvent fonctionner pour insérer des masques auxiliaires en réponse à une manoelivre correspondante des moyens de clavier (2), au moins un desdits masques auxiliaires étant utilisé pour afficher le contenu de mémoire de la section d'informations supplémentaires desdits blocs d'informations (15) dans ladite troisième portion de stockage (10) en réponse à une manoeuvre desdits quatrièmes moyens.

14. Système selon l'une quelconque des revendications 11 à 13, caractérisé en ce que lesdits moyens pour produire lesdits masques sur ledit écran desdits moyens d'affichage visuel (5) peuvent fonctionner pour insérer des masques auxiliaires en réponse à une manoeuvre correspondante des moyens de clavier (2), au moins un desdits masques auxiliaires étant utilisé pour afficher le contenu de mémoire des sections de texte d'adresse de destinataire associées à la même valeur du contenu lu de mémoire de la section de code de localité en réponse à la manoeuvre desdits cinquièmes moyens.

15. Système selon l'une quelconque des revendications 11 à 14, caractérisé en ce que lesdits moyens de commande (1) peuvent fonctionner pour détecter le champ d'informations activé actuellement du masque affiché actuellement sur l'écran, en attente d'une entrée par l'intermédiaire desdits moyens de clavier (2) et, lors de la manoeuvre d'une touche d'aide desdits moyens de clavier, affichent des informations sur tous les types d'informations d'entrée pour ledit champ sur une portion de l'écran d'affichage.

16. Système selon l'une quelconque des revendications 10 à 15, caractérisé en ce que lesdits moyens de commande (1) comprennent des septièmes moyens pour amener lesdits premiers et lesdits deuxièmes moyens à déterminer la valeur du prix de transport pour au moins un autre mode d'expédition et à afficher les barèmes de transport correspondant auxdits différents modes d'expédition dans un masque correspondant sur l'écran en réponse à une manoeuvre correspondante des moyens de clavier (2).

17. Système selon la revendication 16, caractérisé en ce que chacun desdits blocs d'informations (14) dans ladite deuxième portion de stockage (9) comprend un ensemble de valeurs de code, une valeur de code de cet ensemble représentant le mode individuel d'expédition défini par ce bloc d'informations et les autres étant celles sélectionnées parmi les codes représentant les modes individuels d'expédition définis par les autres blocs d'informations (14), lesdits septièmes moyens pouvant fonctionner pour calculer et afficher les prix de transport des modes d'expédition associés audit ensemble de valeurs de code pour effectuer ladite comparaison.

18. Système selon l'une quelconque des revendications 1 à 17, caractérisé en ce que dans ledit premier mode de fonctionnement lesdits premiers moyens activent initialement lesdits moyens de clavier (2) pour une entrée par la manoeuvre de touche qui sert à localiser le bloc d'informations (13) dans la première portion de stockage (8) et activent ensuite lesdits moyens de clavier (2) pour une entrée par la manoeuvre de touche qui sert à localiser le bloc d'informations (14) dans la deuxième portion de stockage (9).

19. Système selon l'une quelconque des revendications 1 à 18, caractérisé en ce que lesdits moyens de mémoire (6) comprennent une sixième portion de stockage (19) pour stocker un sixième nombre souhaité de blocs d'informations (20), et lesdits moyens de commande (1) comprennent des huitièmes moyens pour stocker dans chaque bloc d'informations (20) un ensemble de données de suivi physique pour des emballages réutilisables tels qu'utilisés avec l'objet à expédier, chaque ensemble comprenant au moins un numéro de série de l'emballage entré par l'intermédiaire desdits moyens de clavier (2) et des informations de destinataire provenant du bloc correspondant d'informations (13) dans la première portion de stockage (8).

20. Système selon la revendication 19, caractérisé en ce que lesdits huitièmes moyens peuvent fonctionner pour accéder à ceux sélectionnés parmi lesdits blocs d'informations (20) dans ladite sixième portion de stockage (19) pour un affichage et/ou une impression en réponse à une entrée d'au moins des portions desdites données de suivi physique par l'intermédiaire desdits moyens de clavier (2).

21. Système selon l'une quelconque des revendications 1 à 20, caractérisé en ce que lesdits moyens de commande (1) comprennent des moyens pour calculer le volume cubique de l'objet à expédier à partir de ses dimensions.

22. Système selon l'une quelconque des revendications 1 à 21, caractérisé en ce que lesdits premiers moyens comprennent un deuxième mode de fonctionnement dans lequel des données d'entrée introduites par lesdits moyens de clavier (2) sont stockées sélectivement dans des blocs d'informations (13 à 16) des portions de stockage (8 à 11), ledit deuxième mode de fonctionnement étant activé par une manoeuvre correspondante des moyens de clavier (2).

23. Système selon l'une quelconque des revendications 1 à 22, caractérisé en ce que lesdits moyens de commande (1) comprennent des moyens d'interface d'entrée-sortie (7) pour écrire des données provenant d'une source extérieure de données dans des portions souhaitées de stockage (8 à 11).

24. Système selon l'une quelconque des revendications 1 à 23, caractérisé en ce que chacun desdits blocs d'informations (13) dans ladite première portion de stockage (8) comprend un section de code conçue pour stocker un code représentant un mode d'expédition sélectionné parmi l'ensemble des modes d'expédition défini par lesdits blocs d'informations (14) dans ladite deuxième portion de stockage (9), ledit mode d'expédition sélectionné étant un mode préféré pour le destinataire identifié par la section de texte d'adresse de destinataire du bloc correspondant d'informations (13) dans ladite première portion de stockage (8), et que lesdits moyens de commande (1) peuvent fonctionner pour localiser automatiquement le bloc correspondant d'informations (14) dans ladite deuxième portion de stockage (9) en réponse à une localisation du bloc d'informations (13) dans ladite première portion de stockage (8).

25. Système selon l'une quelconque des revendications 1 à 24, caractérisé en ce que chacun desdits blocs d'informations (13) dans ladite première portion de stockage (8) comprend une section de définition de groupe conçue pour stocker des données de définition de groupe et que lesdits moyens de commande (1) répondent à une entrée de chacune desdites données de définition de groupe en même temps que d'informations de mode d'expédition souhaité et d'une valeur de poids pour amener lesdits premiers, deuxièmes et troisièmes moyens à localiser automatiquement tous les blocs d'informations (13) identifiés par lesdites données entrées de définition de groupe, à déterminer la valeur du prix de transport applicable pour le mode d'expédition et la valeur de poids entrés, et à imprimer les formulaires d'expédition applicables à tous les membres dans le groupe.

26. Système selon l'une quelconque des revendications 1 à 25, caractérisé en ce que chacun desdits blocs d'informations (13) dans ladite première portion de stockage (8) comprend une section d'informations supplémentaires conçue pour stocker des informations autres que les informations d'adresse de destinataire.

27. Système selon la revendication 26, caractérisé en ce que lesdits moyens de commande (1) comprennent des moyens d'interface de sortie pour communiquer le contenu d'informations desdits blocs d'informations (13) dans ladite première portion de stockage (8), quand ils sont sélectionnés par lesdits moyens de clavier (2), à des moyens extérieurs de traitement.

28. Système selon l'une quelconque des revendications 1 à 27, caractérisé en ce que lesdits moyens de mémoire (6) comprennent une septième portion de stockage (21) pour stocker un septième nombre souhaité de blocs d'informations (22), chacun desdits blocs d'informations étant conçu pour stocker des informations d'envoi de lettres en nombre, et que lesdits moyens de commande (1) comprennent des neuvièmes moyens pouvant répondre à une sélection de l'un desdits blocs d'informations (22) dans ladite septième portion de stockage (21) par lesdits moyens d'entrée au clavier (2) pour amener lesdits moyens d'impression (4) à imprimer le contenu du bloc sélectionné d'informations (22) pour toutes les adresses de destinataires, ou un groupe sélectionné d'entre elles, stockées dans ladite première portion de stockage (8), quand elles sont sélectionnées par lesdits moyens de clavier (2).

29. Système selon la revendication 28, caractérisé en ce que lesdits neuvièmes moyens peuvent fonctionner pour compléter les informations du bloc d'informations (22) accédé dans ladite septième portion de stockage (21) à des positions marquées par des informations marquées de manière correspondante des blocs d'informations (13) dans ladite première portion de stockage (8) quand on affiche et/ou imprime les informations apportées en complément.

30. Système selon l'une quelconque des revendications 1 à 29, caractérisé en ce que lesdits moyens d'impression (4) comprennent une alimentation de formulaires en continu, une alimentation par lots et une introduction de documents isolés et que lesdits troisièmes moyens sélectionnent automatiquement les modes individuels d'alimentation en correspondance avec le contenu lu de mémoire de la section de code de formulaire.

31. Système selon l'une quelconque des revendications 1 à 30, caractérisé en ce que lesdits moyens d'entrée de poids sont une balance (3) produisant une signal électrique de sortie qui correspond au poids de l'objet à expédier.

32. Système selon l'une quelconque des revendications 1 à 30, caractérisé en ce que lesdits moyens d'entrée de poids sont un dispositif de balayage lumineux pour analyser des informations de poids sous forme de code à barres.

33. Système selon l'une quelconque des revendications 1 à 30, caractérisé en ce que lesdits moyens d'entrée de poids sont formés par une portion de clavier numérique prévue sur lesdits moyens d'entrée à clavier (2).

34. Système selon l'une quelconque des revendications 1 à 33, caractérisé en ce que lesdits moyens de commande (1) sont formés par un microprocesseur.
